Europäisches Patentamt

European Patent Office

Office européen des brevets

(19)

(11) EP 0 661 543 B1

(12) **EUROPÄISCHE PATENTSCHRIFT**

(45) Veröffentlichungstag und Bekanntmachung des Hinweises auf die Patenterteilung:
**29.04.1998 Patentblatt 1998/18**

(51) Int Cl.⁶: **G01P 3/486**, G01P 15/08

(21) Anmeldenummer: **94118374.1**

(22) Anmeldetag: **23.11.1994**

(54) **Gebersystem zur Ermittlung wenigstens einer der drei Grössen Drehbeschleunigung, Winkelgeschwindigkeit oder Winkellage eines rotierenden Bauteils**

Sensor system for determining at least one of the three parameters, angular acceleration, angular velocity or angular position of a rotating element

Système de captage pour déterminer au moins un des paramètres d'accéleration angulaire, vitesse angulaire ou position angulaire d'un élément rotatif

(84) Benannte Vertragsstaaten:
**DE ES FR GB IT SE**

(30) Priorität: **29.12.1993 DE 4344875**
**03.11.1994 DE 4439233**

(43) Veröffentlichungstag der Anmeldung:
**05.07.1995 Patentblatt 1995/27**

(73) Patentinhaber: **BOEHRINGER, Andreas, Prof. Dr.-Ing.habil.**
**D-70197 Stuttgart (DE)**

(72) Erfinder:
• **Boehringer,Andreas, Prof.-Ing. habil.**
**D-70197 Stuttgart (DE)**
• **Lettau, Ulrich, Dr.-Ing.**
**D-70190 Stuttgart (DE)**

• **Schmidt, Ralph, Dipl.-Ing.**
**D-71334 Waiblingen (DE)**

(74) Vertreter: **Patentanwälte Bartels und Partner**
**Lange Strasse 51**
**70174 Stuttgart (DE)**

(56) Entgegenhaltungen:
DE-A- 3 918 152      DE-C- 739 775
DE-C- 3 314 567

• ELEKTRIE, Bd. 44,Nr. 6, 1990 BERLIN, Seiten 205-206, XP 000149331 BUDIG ET AL 'ZUR ANWENDUNG EINES BESCHLEUNIGUNGSSENSORS IN ANTRIEBSSYSTEMEN'

**Beschreibung**

Die Erfindung betrifft ein Gebersystem zur Ermittlung wenigstens einer der drei Größen Drehbeschleunigung, Winkelgeschwindigkeit oder Winkellage eines rotierenden Bauteils.

Zur Führung einer rotierenden Maschine ist es zweckmäßig, eine Regelung in Kaskadenstruktur mit einer innersten, unterlagerten Regelschleife für die Drehbeschleunigung $\alpha$ des Rotors der Maschine auszuführen. Diese innerste Regelschleife kann dann auf einfache Weise durch einen überlagerten Regelkreis für die Winkelgeschwindigkeit $\omega$ und die Winkellage $\epsilon$ des Rotors der Maschine ergänzt werden. Dem Regelsystem müssen dabei die Zustandgrößen $\alpha$, $\omega$ und $\epsilon$ zugeführt werden. Zumindest dann, wenn hohe Anforderungen an das Regelsystem gestellt werden, wie dies beispielsweise bei hochwertigen Positionierantrieben mit extremer Reaktionsgeschwindigkeit und gleichzeitig hoher Steifigkeit und Positionierruhe oder bei Antriebssystemen für die Druckmaschinentechnik der Fall ist, ist es vorteilhaft, die Drehbeschleunigung $\alpha$ und die Winkellage $\epsilon$ zu messen und die Winkelgeschwindigkeit $\omega$ in einer Streckenbeobachterschaltung nachzubilden. Der bei diesem bekannten Gebersystem (Bernhard Schwarz, Beiträge zu reaktionsschnellen und hochgenauen Drehstrom-Positioniersystemen, Dissertation Universität Stuttgart, 1986) zur Verfügung stehende Satz von Zustandsgrößen ermöglicht zwar eine wesentlich bessere Führung einer Maschine und damit auch eine Verbesserung des Systemverhaltens beim Auftreten von Störgrößen im Vergleich zu Gebersystemen, bei denen dem Regelsystem nur die Meßwerte für die Winkellage $\epsilon$ und die Winkelgeschwindigkeit $\omega$ zugeführt werden. Eine optimale Führung einer Maschine läßt sich aber auch hiermit noch nicht erreichen.

Daher liegt der Erfindung die Aufgabe zugrunde, ein Gebersystem der eingangs genannten Art zu schaffen, mit dem eine noch weiter verbesserte Führung einer Maschine erreichbar ist. Diese Aufgabe löst ein Gebersystem mit den Merkmalen des Anspruches 1.

Die drehstarre Verbindung der Signalgeber führt dazu, daß die Übertragungsfunktionen, welche die Meßwerte für die Drehbeschleunigung und die Winkellage beeinflussen, identisch sind, und daß somit nicht nur die elektronische Bildung der Meßwerte für die Drehbeschleunigung, die Winkelgeschwindigkeit sowie die Winkellage derart erfolgt, daß ein direkt zusammengehöriger Satz von Zustandsgrößen entsteht, sondern daß bereits die meßtechnische Erfassung der Drehbeschleunigung und der Winkellage derart erfolgt, daß schon diese Größen einen direkt zusammengehörigen Satz darstellen.

Bei bekannten Gebersystemen werden dagegen zwei mechanisch getrennte Einzel-Geber, nämlich ein Beschleunigungsgeber für die Drehbeschleunigung und ein inkrementaler Drehgeber für die Winkellage der Maschinenwelle verwendet. Diese sind an unterschiedlichen Stellen mit der Maschinenwelle üblicherweise über Kupplungen verbunden, welche ebenso wie die Maschinenwelle nie völlig drehstarr ausgeführt werden können. Bestenfalls ist einer dieser Einzel-Geber fest auf ein Ende der Maschinenwelle aufgesteckt, die an diesem Ende dann aber abgestochen ist, also einen reduzierten Durchmesser und infolgedessen auch eine verringerte Torsionssteifigkeit aufweist. Die Einzel-Geber sind daher sowohl mit dem Ort, an dem das beschleunigende oder verzögernde Moment angreift, als vor allem auch wegen der Kupplungen und der nicht völlig drehstarren Maschinenwelle, über welche die Kupplungen miteinander verbunden sind, untereinander nicht - wie eigentlich erstrebenswert - drehstarr, sondern vielmehr elastisch verbunden. Der Zusammenhang zwischen den Größen, die am Ort der Einzel-Geber gemessen werden, und den entsprechenden Größen, die an jenem Ort auftreten, an dem das beschleunigende oder verzögernde Moment tatsächlich angreift, wird bei herkömmlichen Gebersystemen daher durch zwei völlig unterschiedliche Übertragungsfunktionen beschrieben, die im allgemeinen sehr hohe Ordnungszahlen aufweisen sowie ausgeprägte Pole und Nullstellen besitzen. Das erfindungsgemäße Gebersystem erfaßt hingegen die Drehbeschleunigung und die Winkellage am selben Ort. Selbst wenn eine drehstarre Verbindung der mechanischen Einheit mit dem Ort, an dem das beschleunigende und verzögernde Moment angreift, nicht möglich sein sollte, sind die Übertragungsfunktionen identisch.

Die beiden Signalgeber können durch unterschiedliche Bereiche eines einzigen Körpers, beispielsweise die äußere Randzone und den innerhalb dieser liegenden Bereich einer Scheibe, gebildet sein. Vielfach wird aber eine mehrteilig ausgebildete mechanische Einheit vorteilhafter sein, die vorzugsweise wenigstens eine zur Rotationsachse des rotierenden Bauteils konzentrische Scheibe aufweist. Bei einer bevorzugten Ausführungsform besteht die mechanische Einheit aus einem Verbund gleichachsig angeordneter Scheiben mit einer den Signalgeber für die Winkellage bildenden Scheibe zwischen zwei gleich ausgebildeten Scheiben, welche den Signalgeber für die Drehbeschleunigung bilden.

Wenn die Erwärmung des Rotationskörpers der mechanischen Einheit durch die in ihm im Betrieb auftretenden Wirbelströme zu einer störenden Verfälschung des die Drehbeschleunigung kennzeichnenden Signales führt, kann man ein Material verwenden, das einen besonders kleinen Temperaturkoeffizienten hat, beispielsweise Manganin oder andere Kupfer-Mangan-Legierungen.

Um mechanischen Deformationen des Rotationskörpers, die auch zu einer Verfälschung des Drehbeschleunigungssignales führen können, in einfacher Weise begegnen zu können, kann man, wenn die mechanische Einheit aus mehreren Scheiben besteht, die der Winkelpositionserfassung dienende Scheibe zwischen Scheiben aus elektrisch leitfähigem, nicht magnetischem Material anordnen. Optimale Verhältnisse erhält man dann, wenn der aus den Scheiben gebildete Stapel symmetrisch zu seiner Quermittenebene ausgebildet ist.

Das von dem Signalerfassungssystem für die Drehbeschleunigung ausgegebene Signal ist gegenüber der am Ort der Messung tatsächlich herrschenden Drehbeschleunigung generell zeitlich verzögert, und zwar gemäß dem Verhalten eines Tiefpasses erster Ordnung. Diese Zeitverzögerung wirkt sich nachteilig auf die Nachbildungen der Drehgeschwindigkeit und der Winkellage mittels der Streckennachbildung aus, die nachfolgend auch als Streckenbeobachterschaltung bezeichnet ist. Bei einer bevorzugten Ausführungsform des erfindungsgemäßen Gebersystems wird daher die zeitliche Verzögerung des Ausgangssignals des Signalerfassungssystems für die Drehbeschleunigung gegenüber der tatsächlichen Drehbeschleunigung zumindest unvollständig mit Hilfe wenigstens einer Zusatzschaltung der Auswerteschaltung kompensiert. Bei einer solchen Kompensation liefert das Gebersystem einen verbesserten Datensatz. Das Ziel, einen kohärenten Datensatz zu erhalten, also einen Datensatz, für den gilt, daß die Winkelgeschwindigkeit gleich der zeitlichen Ableitung der Winkelposition und die Drehbeschleunigung gleich der zeitlichen Ableitung der Winkelgeschwindigkeit ist, läßt sich allerdings nur dann erreichen, wenn dazuhin die erwähnten Übertragungsfunktionen identisch sind.

Vorzugsweise wird von dieser ersten Zusatzschaltung das vom Signalerfassungssystem für die Drehbeschleunigung ausgegebene Signal entsprechend Anspruch 7 gewichtet und in Form einer Vorwärtskopplung zum Ausgangssignal der ersten Integrationsstufe der Streckenbeobachterschaltung addiert.

Auch mittels einer zweiten Zusatzschaltung in Form einer Beobachterschaltung gemäß Anspruch 8 kann eine teilweise Kompensation der unvermeidlichen Meßverzögerung bei der Messung der Drehbeschleunigung erreicht werden. Die Meßverzögerung ist dann in der Regel vernachlässigbar klein.

Die Auswerteschaltung kann rein digital ausgeführt sein. Vorteilhaft ist dabei eine serielle Ausgabe der digitalen Werte. Diese Werte können, was vielfach sehr vorteilhaft ist, über einen Lichtwellenleiter geführt werden.

Sofern die Verwendung eines Materiales mit kleinem Temperaturkoeffizienten für den Signalgeber für die Drehbeschleunigung nicht ausreichend sein sollte, um den Temperatureinfluß auf das Drehbeschleunigungssignal im erforderlichen Umfange zu reduzieren, oder wenn der Einsatz eines solchen Materials nicht möglich ist, kann man die Temperaturabhängigkeit des Ausgangssignals des Signalerfassungssystems für die Drehbeschleunigung mittels einer Kompensationsschaltung beseitigen, in welcher das von dem Signalerfassungssystem gelieferte Ausgangssignal verändert wird. Vorzugsweise wird hierzu das Ausgangssignal in einer Multipliziereinrichtung mit einem Korrekturfaktor multipliziert. Wenn man die temperaturabhängige Meßgliedverstärkung des Signalerfassungssystems für die Drehbeschleunigung mit v bezeichnet muß für den Korrekturfaktor die Beziehung gelten

$$\lambda = \frac{1}{v}.$$

Vorteilhafterweise wird der Eingang der Multipliziereinrichtung für den Korrekturfaktor an einen Speicher angeschlossen, in dem die meßtechnisch oder mittels eines thermischen Modells für den Rotationskörper und seine Umgebung ermittelte Abhängigkeit der Meßgliedverstärkung von der Temperatur abgelegt ist.

Der Korrekturfaktor kann unter Verwendung einer geeigneten Regelschaltung aus gemessenen und/oder synthetisierten Größen generiert werden. Beispielsweise kann durch zweifache Differentiation aus dem Meßwert für die Winkellage ein nachgebildeter Meßwert für die Drehbeschleunigung erzeugt werden. Die Regelschaltung kann dann mit dem Korrekturfaktor als Stellgröße das modifizierte, von der Temperatur unabhängige Drehbeschleunigungssignal der nachgebildeten Meßgröße nachführen. Vorteilhafter ist es jedoch, dem Regler die Differenz aus dem nur einmal differenzierten Meßwert für die Winkellage und dem einmal integrierten, modifizierten Drehbeschleunigungssignal zuzuführen.

Im folgenden ist die Erfindung an Hand von in der Zeichnung dargestellten Ausführungsbeispielen im einzelnen erläutert.

Es zeigen

Fig. 1 das Schaltbild eines idealen Gebersystems mit Streckenbeobachterschaltung,

Fig. 2 das Schaltbild eines realen Gebersystems mit Streckenbeobachterschaltung,

Fig. 3 einen schematisch dargestellen Querschnitt eines ersten Ausführungsführungsbeispiel des mechanischen Teils des Gebersystems im montierten Zustand,

Fig. 4 einen Längsschnitt dieses Ausführungsbeispiels,

Fig. 5 einen schematisch dargestellten Querschnitt eines zweiten Ausführungsbeispiels des mechanischen Teils des Gebersystems im montierten Zustand,

Fig. 6 einen schematisch dargestellten Längsschnitt dieses zweiten Ausführungsbeispiels,

Fig. 7 einen schematisch dargestellten Querschnitt eines dritten Ausführungsbeispiels des mechanischen Teils des Gebersystems im montierten Zustand,

Fig. 8 einen schematisch dargestellten Längsschnitt des Ausführungsbeipiels gemäß Fig. 7,

Fig. 9 einen schematisch dargestellten Querschnitt eines vierten Ausführungsbeispiel des mechanischen Teils des Gebersystems im montierten Zustand,

Fig. 10 eine teils in Längsrichtung geschnitten dargestellte Ansicht des Ausführungsbeispiels gemäß Fig. 9,

Fig. 11 einen schematisch dargestellten Querschnitt eines fünften Ausführungsbeispiels des mechanischen Teils des Gebersystems,

Fig. 12 eine teils in Längsrichtung geschnitten dargestellte Ansicht des Ausführungsbeispiels gemäß Fig. 11,

Fig. 13 das Blockschaltbild eines Gebersystems mit einer Streckennachbildung Gebern für die Drehbeschleunigung und die Winkellage mit einheitlicher Übertragungsfunktion,

Fig. 14 eine Blockschaltbild einer verbesserten ersten Ausführungsform des Gebersystems gemäß Fig. 13,

Fig. 15 eine zu der Schaltung gemäß Fig. 14 äquivalente Schaltung,

Fig. 16 ein Blockschaltbild einer zweiten, gegenüber der ersten Ausführungsform verbesserten Ausführungsform des Gebersystems,

Fig. 17 ein Blockschaltbild einer dritten gegenüber der zweiten Ausführungsform verbesserten Ausführungsform des Gebersystems,

Fig. 18 ein Blockschaltbild einer ersten Ausführungsform einer Auswerteschaltung für die Signale des Signalerfassungssystems für die Winkellage,

Fig. 19 das Blockschaltbild einer zweiten Ausführungsform einer Auswerteschaltung für die Signale des Signalerfassungssystems die Winkellage.

Fig. 20 eine Draufsicht auf den Signalgeber einer weiteren Ausführungsform,

Fig. 21 einen Schnitt nach der Linie XXI-XXI der Fig. 20,

Fig. 22 ein Blockschaltbild eines Ausführungsbeispiels mit Temperaturkompensation,

Fig. 23 ein Blockschaltbild des Ausführungsbeispiels gemäß Fig. 22 mit einer ersten Ausführungsform der Temperaturkompensation,

Fig. 24 ein Blockschaltbild des Ausführungsbeispiels gemäß Fig. 22 mit einer zweiten Ausführungsform der Temperaturkompensation,

Fig. 25 eine schematisch dargestellte Ansicht eines Ausführungsbeispiels mit einer Temperaturerfassung des Rotationskörper der Meßvorrichtung für die Drehbeschleunigung,

Fig. 26 einen Schnitt nach der Linie XXVI-XXVI der Fig. 25,

Fig. 27 das Schaltbild des Temperatursensors.

In der elektrischen Antriebstechnik ist es häufig erforderlich, die Antriebsmaschine zu regeln. Bei der Regelung sehr hochwertiger Positionierantriebe mit extremer Reaktionsgeschwindigkeit und gleichzeitig hoher Steifigkeit und Positionierruhe, aber auch bei anderen Antriebssystemen, beispielsweise solchen in der Druckmaschinentechnik, setzt die Regelung eine Erfassung der Drehbeschleunigung, Winkelgeschwindigkeit und Winkellage der Welle der Antriebsmaschine, gegebenenfalls auch der Welle der von ihr angetriebenen Arbeitsmaschine, voraus. Nur dann können vorhandene Elastizitäten, insbesondere der Verbindung zwischen Antriebsmaschine und Arbeitsmaschine, die beispielsweise durch Getriebe und Kupplungen bedingt sind, in hinreichender Weise regelungstechnisch beherrscht werden.

Zur Führung einer Maschine ist es zweckmäßig, eine Regelung in Kaskadenstruktur mit einer innersten, unterlagerten Regelschleife für die Drehbeschleunigung $\alpha$ des Maschinenrotors auszuführen. Diese innerste Schleife kann dann auf einfache Weise durch überlagerte Regelkreise für die Winkelgeschwindigkeit $\omega$ und die Winkellage $\varepsilon$ des Maschinenrotors ergänzt werden. Diese Art der Regelung setzt voraus, daß dem Regelsystem ein aus den Zustandsgrößen $\alpha$, $\omega$ und $\varepsilon$ bestehender Datensatz zugeführt wird. Sinnvollerweise werden $\alpha$ und $\varepsilon$ gemessen und einer Streckennachbildung, im folgenden als Streckenbeobachterschaltung bezeichnet, zugeführt, welche die Größen $\omega_b$ und $\varepsilon_b$ liefert.

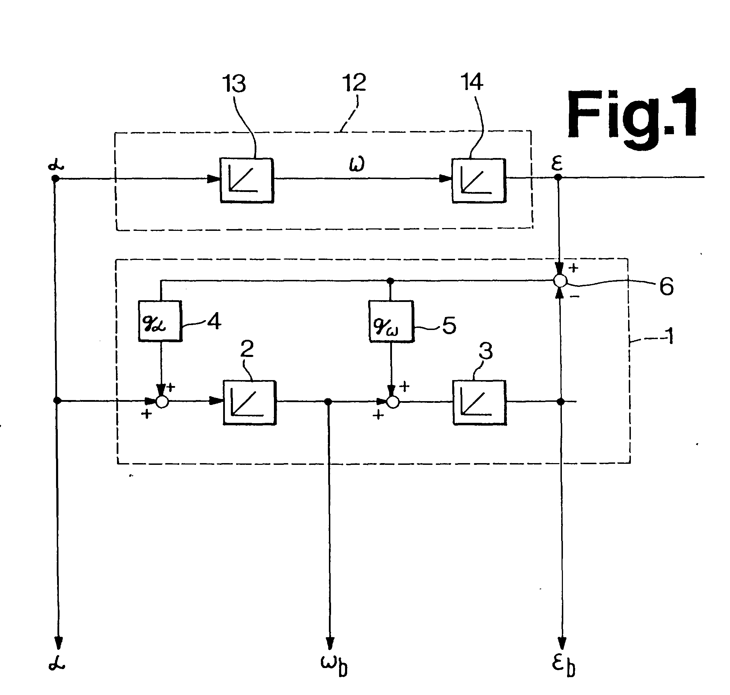

Wie Fig. 1 zeigt, benötigt eine solche Streckenbeobachterschaltung 1 eine Streckennachbildung, die im vorliegenden Fall aus den zwei Integrierern 2 bzw. 3 besteht, welche die Bewegungsgleichungen der Maschine gemäß

$$\omega = \frac{d\varepsilon}{dt} \text{ und } \alpha = \frac{d\omega}{dt} = \frac{d^2\varepsilon}{dt^2}$$

nachbilden. Ferner sind zwei Korrekturglieder 4 und 5 vorhanden, welche die stationäre Genauigkeit der beobachteten Signale $\omega_b$ und $\varepsilon_b$ bei Verfälschungen des Meßsignals für die Drehbeschleunigung $\alpha$, z.B. durch Verstärkungs- und Offsetfehler, sicherstellen. Diese beiden Korrekturglieder 4 und 5 sind eingangsseitig an einen Vergleichspunkt 6 angeschlossen, in dem die gemessene Winkellage $\varepsilon$ mit dem Ausgangssignal des Integrierers 3 verglichen wird. Dem Integrierer 2 wird die Summe aus der gemessenen Drehbeschleunigung $\alpha$ und dem vom Korrekturglied 4 gelieferten Korrekturwert zugeführt, dem Integrierer 3 die Summe aus dem von Integrierer 2 gebildeten Wert $\omega_b$ der Winkelgeschwindigkeit und dem vom Korrekturglied 5 gelieferten Korrekturwert. Vorzugsweise wird dem Regelsystem nicht die gemessene Winkellage $\varepsilon$, sondern die von der Beobachterschaltung 1 gelieferte Zustandsgröße $\varepsilon_b$ zugeführt.

Anzustreben ist, daß dem Regelsystem ein kohärenter Satz von Zustandsgrößen zugeführt wird. Der Satz von Zustandsgrößen ist dann kohärent, wenn die Zustandsgrößen die Gleichungen

$$\omega_b = \frac{d\varepsilon_b}{dt} \text{ und } \alpha = \frac{d\omega_b}{dt} = \frac{d^2\varepsilon_b}{dt^2}$$

erfüllen.

Das in Fig. 1 dargestellte, ideale System liefert einen derartigen kohärenten Satz von Zustandsgrößen. Allerdings setzt das dort zugrundegelegte strukturdynamische Modell voraus, daß die Zustandsgrößen $\varepsilon$ und $\alpha$ dort gemessen werden, wo das die Maschine beschleunigende oder verzögernde Moment angreift, so daß jegliche Elastizität zwischen dem Ort der Messung und dem Ort, an dem das beschleunigende oder verzögernde Moment angreift, vermieden ist. Voraussetzung ist hierfür also, mit anderen Worten ausgedrückt, eine völlig starre Verbindung zwischen dem Ort der Messung und dem Ort, an dem das Moment angreift. Beispielsweise müßten bei einer Gleichstrom-Scheibenläufermaschine also $\alpha$ und $\varepsilon$ direkt an der Ankerscheibe gemessen werden, was aber praktisch nicht möglich ist.

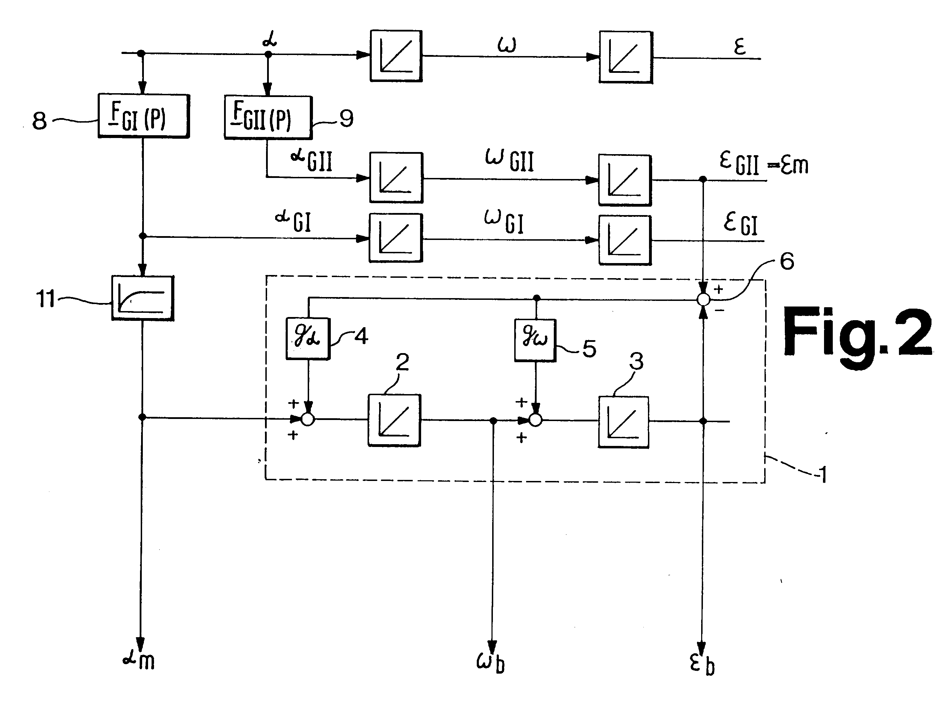

Üblicherweise werden zwei separate Geber, nämlich ein Beschleunigungsgeber für die Drehbeschleunigung und ein inkrementaler Drehgeber für die Winkellage der Maschinenwelle mit dem häufig im Durchmesser reduzierten einen Ende der Maschinenwelle direkt oder unter Zwischenschaltung einer Kupplung, verbunden. Die Orte, an denen die Drehbeschleunigung und die Winkellage gemessen werden, sind deshalb elastisch mit jenem Ort verbunden, an dem das beschleunigende oder verzögernde Moment angreift. In Fig. 2, die ein reales System wiedergibt, ist diese elastische Verbindung durch je ein Übertragungsglied 8 bzw. 9 berücksichtigt, welche die Übertragungsfunktionen $\underline{F}_{GI}(p)$ bzw. $\underline{F}_{GII}(p)$ kennzeichnen, die unterschiedlich sind. Hinzu kommt, daß der Beschleunigungsgeber selbst das Verhalten eines Verzögerungsgliedes erster Ordnung aufweist, was in Fig. 2 durch ein Übertragungsglied 11 berücksichtigt ist, das dem Übertragungsglied 8 nachgeordnet ist und an seinem Ausgang das durch Messung gewonnene Drehbeschleunigungssignal $\alpha_m$ liefert.

Im Argument der obigen Übertragungsfunktionen $F_{GI}(p)$ bzw. $F_{GII}(p)$ ist p die allgemein gebräuchliche komplexe Frequenzvariable der Laplace-Transformation.

Die Auswirkungen der Übertragungsfunktion $\underline{F}_{GI}(p)$ auf das Regelsystem sind zwar kritisch, können aber mittels bekannter regelungstechnischer Maßnahmen (DE 41 15 010 A1) im unterlagerten Beschleunigungsregelkreis beherrscht werden. Die Tatsache, daß der Beschleunigungsgeber das Verhalten eines Verzögerungsgliedes hat und daß die beiden Übertragungsfunktionen $\underline{F}_{GI}(p)$ und $\underline{F}_{GII}(p)$ unterschiedlich sind, führt jedoch zu schwerwiegenden, bisher nicht beherrschbaren regelungstechnischen Problemen. Wie die Erfindung zeigt, können diese Probleme darin gesehen werden, daß dem Regelsystem nicht ein kohärenter Satz von Zustandsgrößen zugeführt wird, sondern die nichtkohärenten Zustandsgrößen $\alpha_m$, $\omega_b$, $\varepsilon_b$, die unterschiedlichen, miteinander elastisch verkoppelten Systemen entnommen werden. Die erfindungsgemäße Lösung sieht deshalb ein Gebersystem vor, bei dem die Meßvorrichtungen für die beiden grundsätzlich erfaßten Größen $\alpha_G$ und $\varepsilon_G$ drehstarr miteinander verbunden sind und als eine mechanische Einheit ausgebildet sind, bei der zwischen den meßtechnisch erfaßten Größen $\alpha_G$ und $\varepsilon_G$ die Beziehung

$$\alpha_G = \frac{d^2\varepsilon_G}{dt^2}$$

mathematisch korrekt und stets, also nicht nur statisch und für kleine Frequenzen, sondern auch dynamisch bis zu einem sehr hohen Frequenzbereich, erfüllt ist. Zum einen werden durch die drehstarre Kopplung der beiden Meßvorrichtungen die den beiden Übertragungsgliedern 8 und 9 zugrundeliegenden Übertragungsfunktionen identisch. Es gilt dann

$$\underline{F}_{GI}(p) = \underline{F}_{GII}(p) = \underline{F}_G(p).$$

Außerdem gilt in diesem Falle für die Drehbeschleunigungswerte und die Winkelpositionswerte

$$\alpha_{GI} = \alpha_{GII} = \alpha_G$$

$$\omega_{GI} = \omega_{GII} = \omega_G$$

$$\varepsilon_{GI} = \varepsilon_{GII} = \varepsilon_G.$$

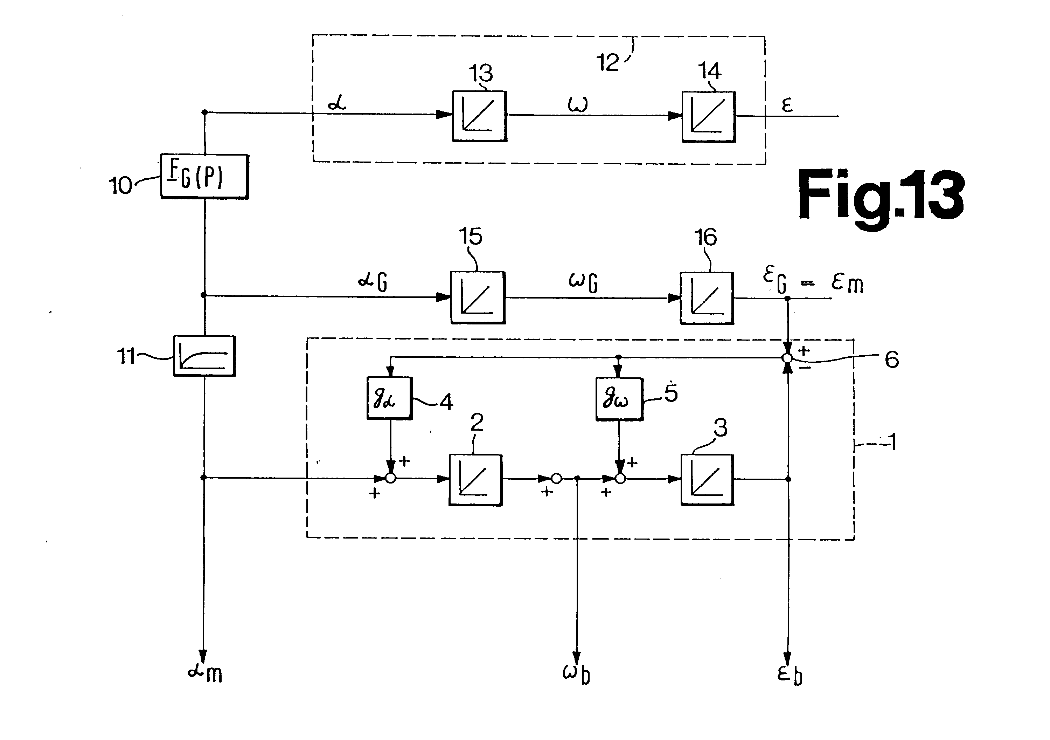

Wie das Blockschaltbild gemäß Fig. 13 zeigt, unterscheidet sich unter den vorstehend genannten Voraussetzungen das reale System von dem idealen System, das dem Blockschaltbild gemäß Fig. 1 zugrundeliegt, im wesentlichen nur durch das Übertragungsglied 10 mit der Übertragungsfunktion $\underline{F}_G(p)$, das berücksichtigt, daß $\alpha_G$ und $\varepsilon_G$ nicht direkt dort gemessen werden können, wo das beschleunigende oder verzögernde Moment angreift, sowie durch ein Übertragungsglied 11, welches die unvermeidbare Tatsache berücksichtigt, daß der Beschleunigungsgeber selbst das Verhalten eines Verzögerungsgliedes erster Ordnung aufweist.

Während bei dem Blockschaltbild gemäß Fig. 1 zugrundeliegenden, idealen Modell die beiden Eingänge der Streckenbeobachterschaltung 1 mit dem Eingang bzw. dem Ausgang der mechanischen Teilstrecke 12 verbunden sind, welche durch die beiden in Reihe geschalteten Integrierer 13 und 14 nachgebildet ist, die den Zusammenhang zwischen den am Ort des Angreifens des Drehmomentes herrschenden Zustandsgrößen $\alpha$, $\omega$ und $\varepsilon$ kennzeichnen, ist bei dem erfindungsgemäßen, dem Blockschaltbild gemäß Fig. 13 zugrunde liegenden, realen System der Eingang der Streckenbeobachterschaltung 1 für die Zustandsgröße der Drehbeschleunigung mit dem Ausgang des Übertragungsgliedes 11 und der Eingang für die Zustandsgröße der Winkellage mit dem Ausgang derjenigen mechanischen Teilstrecke verbunden, welche durch die beiden in Reihe geschalteten Integrierer 15 und 16 nachgebildet ist, die den Zusammenhang zwischen den am Ort der erfindungsgemäßen Meßvorrichtung herrschenden Zustandsgrößen $\alpha_G$, $\omega_G$ und $\varepsilon_G$ kennzeichnen. Zur Ausbildung der Streckenbeobachterschaltung 1 wird auf die Erläuterungen verwiesen, die im Zusammenhang mit Fig. 1 gegeben wurden.

Dem Regelsystem werden der Wert der Drehbeschleunigung $\alpha_m$ und die von der Streckenbeobachterschaltung 1 gebildeten Werte für die Winkelgeschwindigkeit $\omega_b$ und die Winkellage $\varepsilon_b$ zugeführt, welche einen Datensatz bilden, der schon eine recht gute Annäherung an einen kohärenten Datensatz darstellt. Dies gilt vor allem dann, wenn die Kopplung der Meßvorrichtungen für die Drehbeschleunigung und die Winkellage nicht nur miteinander, sondern auch mit dem Ort, an dem das Drehmoment angreift, so starr ist, daß die Übertragungsfunktion des Übertragungsgliedes 10 annähernd gleich 1 ist. Dies kann in der Regel dadurch erreicht werden, daß man die Meßvorrichtungen starr mit einem unbelasteten Wellenende der Maschine koppelt, und zwar vorzugsweise an einer Stelle, an welcher das Wellenende noch den vollen Wellendurchmesser hat.

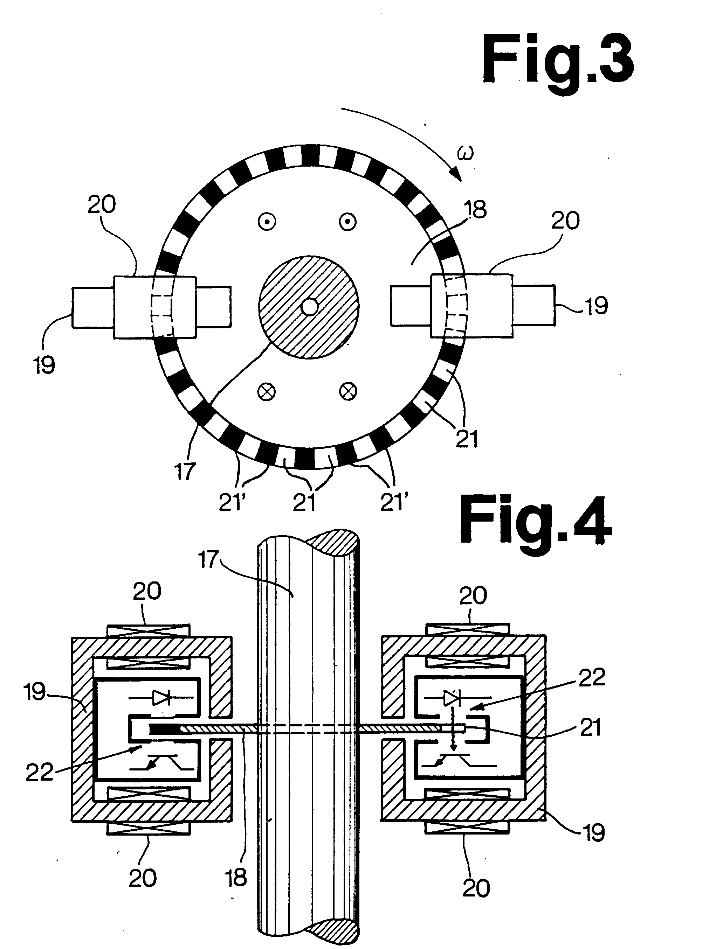

Ein erstes Ausführungsbeispiel einer mechanischen Baueinheit zur Messung der Drehbeschleunigung und der Winkellage einer Welle 17 ist schematisch in den Fig. 3 und 4 dargestellt.

Diese Einheit weist einen nach dem Ferraris-Prinzip arbeitenden Beschleunigungsgeber mit einer Meßscheibe 18 als Signalgeber aus elektrisch leitfähigem, aber nicht ferromagnetischem Material auf. Diese Meßscheibe 18 ist über die drehbare Welle 17 praktisch drehstarr mit dem Rotor der zugehörigen, nicht dargestellten Maschine verbunden, also dem Ort, an dem das Drehmoment angreift. Die Meßscheibe 18 wird in ihrer einen Hälfte in der einen und ihrer anderen Hälfte in der entgegegesetzten Richtung von einem magnetischen Gleichfeld durchsetzt, das von einem nicht dargestellten, ortsfesten Magnetsystem erzeugt wird. Die Symbole (·) und (×) kennzeichnen die eine und die andere Durchtrittsrichtung des magnetischen Gleichfeldes. Wenn die Meßscheibe 18 zusammen mit der Welle 17 rotiert, entstehen in der Meßscheibe 18 Wirbelströme, welche in sich geschlossenen Strombahnen folgen, die sich um zwei diametral bezüglich der Welle 17 angeordnete Zentren bilden, welche auf der Trennlinie zwischen den beiden in entgegengesetzten Richtungen vom magnetischen Gleichfeld durchdrungenen Hälften liegen. Diese Wirbelströme, deren Betrag der Winkelgeschwindigkeit der Meßscheibe 18 proportional ist, erzeugen ein mit ihnen verkettetes Magnetfeld. Im Ausführungsbeispiel wird dieses Magnetfeld mittels je eines Magnetflußleitkörpers 19 aufgenommen, die je einen magnetischen Kreis mit einem einzigen Lufspalt bilden, in den die Meßscheibe 18 eingreift. Die in den Magnetflußleitkörpern 19 geführten magnetischen Flüsse durchsetzen wenigsten eine, im Ausführungsführungsbeispiel zwei auf jedem der Magnetflußleitkörper 19 angeordnete Heßspulen 20. Letztere bilden zusammen mit den Magnetflußleitkörpern 19 das Signalerfassungssystem. Im Ausführungsbeispiel weisen die Magnetflußleitkörper 19 vier geradlinige, ein Rechteck definierende Schenkel auf, wobei der eine Schenkel durch den Luftspalt unterbrochen ist, und die Meßspulen 20 sind auf den sich gegenüberliegenden Schenkeln angeordnet, welche sich an den durch den Luftspalt unterbrochenen Schenkeln anschließen. Die in den Meßspulen 20 induzierten elektrischen Spannungen sind proportional der Drehbeschleunigung der Meßscheibe. Im Ausführungsbeispiel sind alle vier Meßspulen 20 in Reihe geschaltet, so daß das Drehbeschleunigungssignal gleich der Summe der in den vier Meßspulen 20 induzierten Spannungen ist.

Damit die Winkellage an der gleichen Stelle wie die Drehbeschleunigung gemessen wird, ist die Meßscheibe 18, vorzugsweise längs ihrer äußeren Randzone, mit Markierungen versehen, welche die von den Markierungen gebildete Ringzone in gleich große Segmente unterteilt. Im Ausführungsbeispiel handelt es sich bei den Markierungen um im Wechsel aufeinanderfolgende, im Bereich des verwendeten Lichtes optisch transparente Fenster 21 und lichtundurchlässige oder weniger transparente Bereiche 21'.

Zur Abtastung dieser Bereiche werden im Ausführungsbeispiel zwei gegenüberliegend angeordnete Gabellichtschranken 22 verwendet, die ein Signalerfassungssystem bilden und je aus einer Leuchtdiode sowie einem Fototransistor bestehen und in einem U-förmigen Gehäuse angeordnet sind, zwischen dessen Schenkel die mit den Markierungen versehene Randzone der Meßscheibe 18 eingreift. Die beiden Gehäuse der Gabellichtschranken 22 werden vom einen bzw. anderen Magnetflußleitkörper 19 umgriffen, mit dem sie zur Bildung einer Baueinheit verbunden sind. Die Fototransistoren liefern an ihren Ausgängen je ein Signal, dessen Amplitude vom Grad der Überdeckung der jeweiligen Lichtschranke mit einer Markierung der Meßscheibe 18 abhängt. Die Auswertung dieser Signale zur Gewinnung der Zustandsgröße $\varepsilon_G$ des Drehwinkels kann entweder rein binär durch Auszählen von Impulsen oder, weit genauer, unter Berücksichtigung der stetig vom jeweiligen Überdeckungsgrad abhängigen Signalamplituden mit einem speziellen Auswerteverfahren erfolgen.

Im Ausführungsbeispiel sind zur Bildung der transparenten Fenster 21 in die äußere Randzone der elektrisch leitfähigen, nicht ferrogmagnetischen Scheibe 18 eine größere Anzahl von Öffnungen in Form von radial verlaufenden Schlitzen eingeschnitten. Diese werden vorzugsweise mit Hilfe eines Laserstrahls hergestellt. Sollten das Laserstrahl-Schneidverfahren oder andere Gründe dies erfordern, so kann die Dicke der Meßscheibe im Bereich der von den einzuschneidenden Schlitzen gebildeten, ringförmigen Randzone deutlich reduziert sein gegenüber der Dicke der Meßscheibe in ihren restlichen Bereichen. Es ist aber beispielsweise auch möglich, die Meßscheibe 18 aus einer ersten, elektrisch leitfähigen und nicht ferromagnetischen Scheibe und einer zu dieser konzentrisch angeordneten und im Durchmesser größeren zweiten Scheibe aus transparentem Material zu bilden und beide Scheiben beispielsweise miteinander zu verkleben. In der über die erste Scheibe überstehenden Randzone der zweiten Scheibe können dann fotografisch oder drucktechnisch lichtundurchlässige Segmente oder Striche aufgebracht werden, welche die lichtundurchlässigen Bereiche 21' bilden.

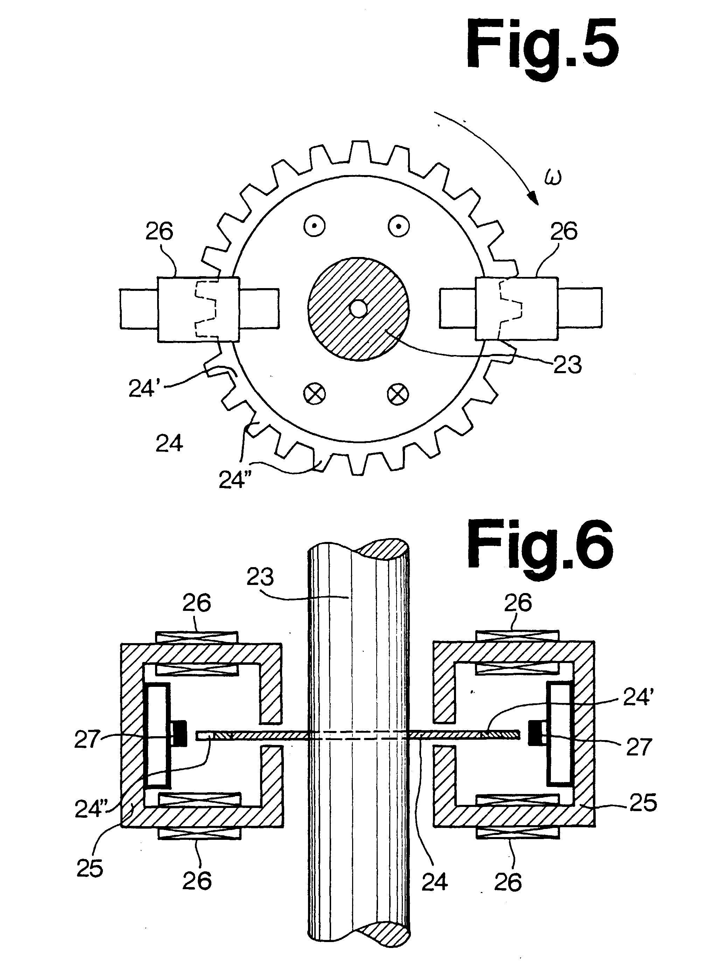

Wie die Fig. 5 und 6 zeigen, kann der Geber für die Winkellage statt auf dem optischen Prinzip auf dem ebenfalls bekannten magnetischen Prinzip beruhen. Das in den Fig. 5 und 6 dargestellte zweite Ausführungsbeispiel einer Baueinheit zur Messung der Drehbeschleunigung und des Drehwinkels einer Welle 23 am gleichen Ort unterscheidet sich deshalb von dem Ausführungsbeispiel gemäß den Fig. 3 und 4 nur dadurch, daß die Meßscheibe 24, die starr mit der Welle 23 verbunden ist, nur innerhalb ihrer äußeren Randzone aus einem elektrisch leitfähigen, nicht ferromagnetischen Material besteht. Die äußere Randzone wird durch einen starr mit dem inneren Teil der Meßscheibe 24 verbundenen, ferromagnetischen Ring 24' gebildet, der, wie Fig. 5 zeigt, radial nach außen ragende, ferromagnetische Zähne 24'' bildet. Innerhalb der beiden Magnetflußleitkörper 25, welche wie die Magnetflußleitkörper 19 ausgebildet und angeordnet sind und je zwei Meßspulen 26 tragen, ist je ein Magnetfeldfühler 27 angeordnet. Diese erzeugen elektrische Impulse, wenn die Meßscheibe 24 rotiert. Bei dem Magnetfeldfühler 27 handelt es sich im Ausführungsbeispiel um Differential-Feldplatten mit integrierten Permanentmagneten.

Ferromagnetische Zähne können in verschiedener Weise mit einer elektrisch leitfähigen, nicht ferromagnetischen Scheibe verbunden werden. Statt der bei dem Ausführungsbeispiel gemäß den Fig. 5 und 6 vorgesehenen Fügeverbindung des kompletten Zahnringes 24'' mit der Scheibe, die beispielsweise durch Verschweißung erfolgen kann, können auch einzelne Zähne durch eine Fügeverbindung mit der Scheibe verbunden, beispielsweise an deren äußeren Umfang angeschweißt sein. Eine andere Möglichkeit besteht darin, den Fußbereich einzelner Zähne in schwalbenschanzförmige Aussparungen der Scheibe einzupressen.

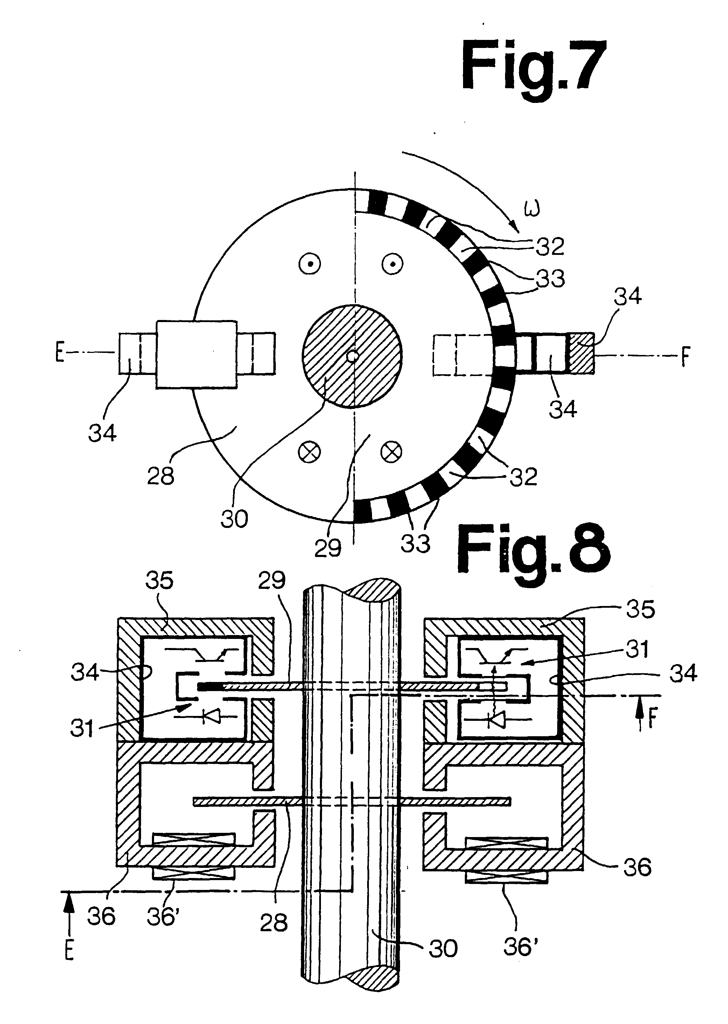

Sofern die Welle, an welcher die Drehbeschleunigung und die Winkellage gemessen werden sollen, ausreichend starr ist, kann man auch, wie die Fig. 7 und 8 zeigen, in einem geringen Abstand von einer ersten Meßscheibe 28 eines Drehbeschleunigungsgebers, der wie bei dem Ausführungsbeispiel gemäß den Fig. 3 und 4 ausgebildet ist, eine zweite Meßscheibe 29 starr mit der Welle 30 verbinden, an welcher die Messungen vorgenommen werden sollen. Das Material für die zweite Meßscheibe 29 kann dann so gewählt werden, daß sie in einfacher Weise mit den für einen inkrementalen Drehgeber erforderlichen Markierungen versehen werden kann. In dem Ausführungsbeispiel gemäß den Fig. 7 und 8 weist die Vorrichtung zur Messung der Winkellage wie bei dem Ausführungsbeispiel gemäß den Fig. 3 und 4 zwei Gabellichtschranken 31 auf, deren Lichtstrahl im Wechsel durch die transparenten Fenster 32 freigegeben und durch die lichtundurchlässigen Bereiche 33 unterbrochen wird. Die beiden, je eine der Gabellichtschranken 31 enthaltenden Gehäuse 34 sind in je einem Halter 35 angeordnet, die mit den beiden Magnetflußleitkörpern 36 des Drehbeschleunigungsgebers verbunden sind.

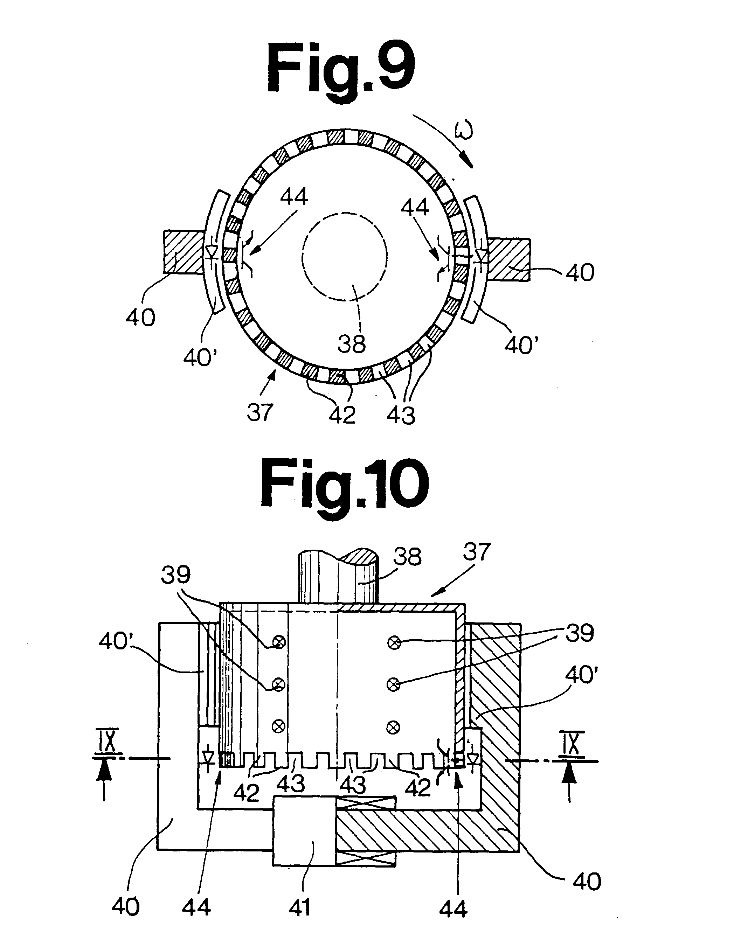

Wie die Fig. 9 und 10 zeigen, kann man die mechanische Einheit, welche die beiden Geber für die Drehbebeschleunigung und die Winkellage integriert, auch mittels eines topfförmigen Körpers, eines sogenannten Glockenläufers 37 realisieren, dessen hohlzylindrischer Teil konzentrisch zu einer Welle 38 über seinen scheibenförmigen Boden starr verbunden ist. Der Glockenläufer 37 besteht aus elektrisch leitfähigem, nicht ferromagnetischem Material und wird in seinem hohlzylindrischem Bereich von einem magnetischen Gleichfeld durchsetzt, das, wie die Kennzeichnungen 39 andeuten, den hohlzylindrischen Teil senkrecht zur Zeichenebene durchdringt. Das magnetische Gleichfeld durchdringt deshalb den Glockenläufer 37 in der einen Hälfte seines Umfangs von außen nach innen und in der anderen Hälfte von innen nach außen. Hierdurch werden, wenn der Glockenläufer 37 rotiert, Wirbelströme induziert, die längs in sich geschlossener Linien verlaufen, welche sich um den einen bzw. anderen von zwei Polen schließen, die auf den beiden Linien liegen, welche den hohlzylindrischen Teil in die beiden erwähnten Hälften teilen. Vorzugsweise ist das Innere des Hohlzylinders mit einem ferromagnetischen Kern ausgefüllt, welcher entweder bezüglich des magnetischen Gleichfeldes in Ruhe ist oder aber aus einem Material besteht, dessen elektrische Leitfähigkeit so gering ist, daß die Größe der sich in diesem Kern ausbildenden Wirbelströme vernachlässigbar klein bleibt. Ein U-artiger Magnetflußleitkörper 40 nimmt zwischen seinen an den beiden Schenkeln vorgesehenen Polschuhen 40' den Glockenläufer 37 auf, wie dies die Fig. 9 und 10 zeigen. Der mit den Wirbelströmen verkettete Magnetfluß schließt sich über den Magnetflußleitkörper 40, weshalb in einer auf diesem angeordneten Meßspule 41 eine Spannung induziert wird, die proportional der Drehbeschleunigung ist.

Die freie Randzone des hohlzylindrischen Teils des Glockenläufers 37 bildet eine Reihe äquidistanter Zähne 42 mit dazwischen liegenden Fenstern 43. Zwei gegenüberliegend angeordnete Gabellichtschranken 44 bilden zusammen mit den Zähnen 42 und den Fenstern 43 einen inkrementalen Drehgeber.

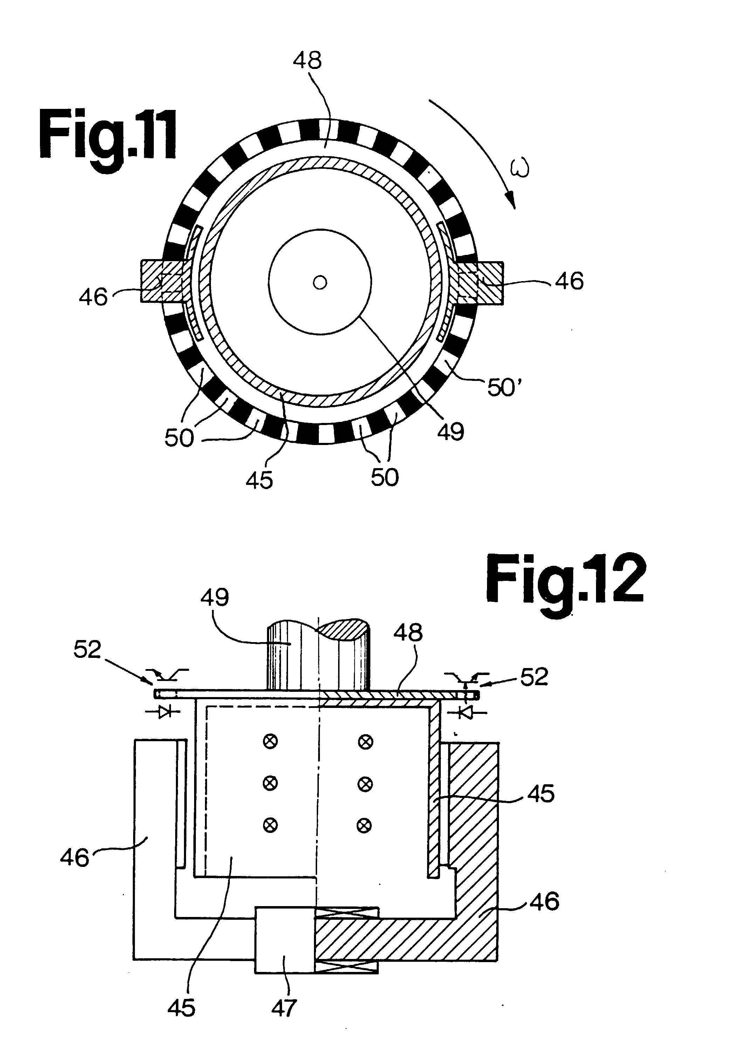

Das in den Fig. 11 und 12 dargestellte Ausführungsbeispiel der mechanischen Einheit, in welche die Geber für die Drehbeschleunigung und die Winkellage integriert sind, weist auch einen Glockenläufer 45 des Drehbeschleunigungsgebers mit zugehörigem Magnetflußleitkörper 46 und einer Meßspule 47 auf. Es unterscheidet sich insoweit nicht von dem Drehbeschleunigungsgeber des Ausführungsbeispiels gemäß den Fig. 9 und 10. Abweichend von diesem Ausführungsbeispiel ist hier für den Winkellagegeber eine ebene Scheibe 48 vorgesehen, die an der Außenseite des Bodens des Glockenläufers 45 anliegt und mit diesem sowie der Welle 49, an welcher die Messungen vorzunehmen sind, starr verbunden ist. Wie insbesondere Fig. 11 zeigt, ist die äußere Randzone der Scheibe 48 durch transparente Fenster 50 und lichtundurchlässige Bereiche 51 in gleich große Segmente unterteilt, wie dies auch bei dem Ausführungsspiel gemäß den Fig. 3 und 4 vorgesehen ist. Durch die Fenster 50 und die Bereiche 51 wird der Lichtstrahl von zwei diametral angeordneten Gabellichtschranken 52 im Wechsel freigegeben und unterbrochen, wenn die Welle 49 rotiert.

Auch bei einer vollständig drehstarren Verbindung der beiden Meßvorrichtungen für die Drehbeschleunigung und die Winkellage miteinander sowie mit dem Ort, an dem das Drehmoment angreift, bilden, wie aus Fig. 13 hervorgeht, die zur Verfügung stehenden Zustandsgrößen $\alpha_m$, $\omega_b$ und $\varepsilon_b$ noch keinen vollständig kohärenten Datensatz, weil der Streckenbeobachterschaltung 1 das mit der Meßzeitkonstanten $T_m$ verzögerte Signal

$$\alpha_m = \frac{1}{1 + pT_m} \cdot \alpha_G$$

als Eingangsgröße zugeführt wird und bei der dargestellten Struktur der Streckenbeobachterschaltung 1 davon ausgegangen wurde, daß das tatsächliche, unverzögerte Signal $\alpha_G$ zugeführt wird. In obiger Gleichung ist p wieder die allgemein gebräuchliche komplexe Frequenzvariable der Laplace-Transformation.

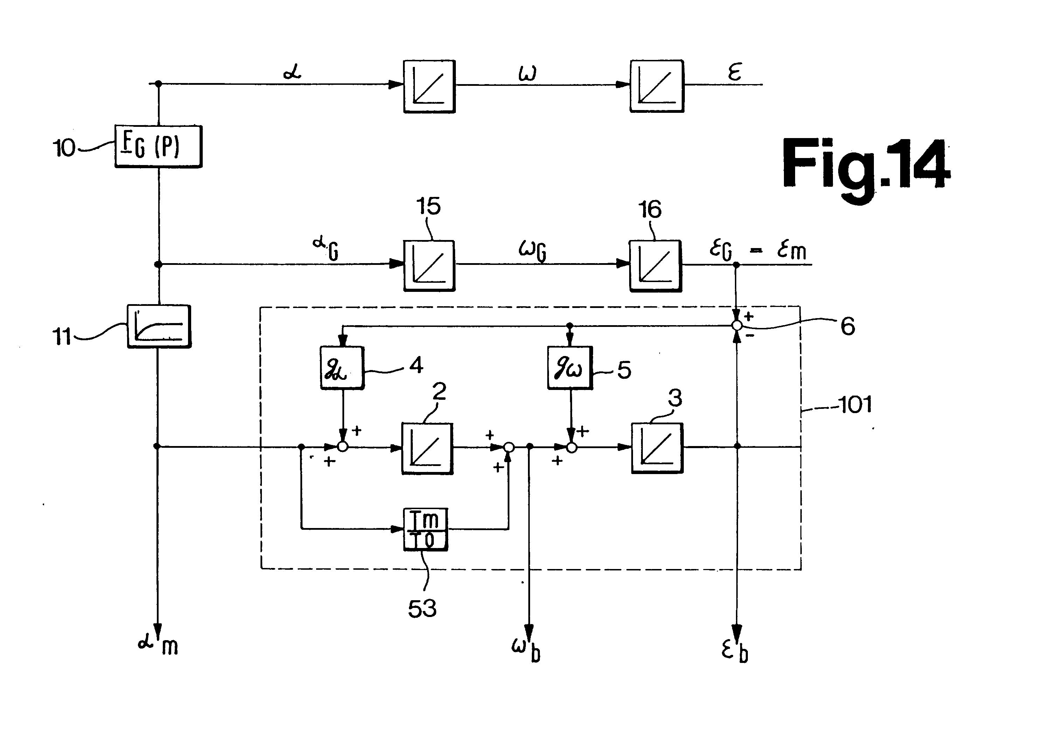

Die Beseitigung der sich aus dem soeben geschilderten Zusammenhang ergebenden Nachteile gelingt mit der in Fig. 14 dargestellten, verbesserten Ausführung der Streckenbeobachterschaltung 101, die zu einer deutlichen Überlegenheit gegenüber den bekannten Lösungen führt. In der Streckenbeobachterschaltung 101 wird das verzögerte Signal für die Drehbeschleunigung $\alpha_m$ in einem Block 53 mit dem Faktor $T_m/T_o$ gewichtet, wobei $T_o$ die Integrationszeitkonstante des Integrierers 2 bedeutet, und zum Ausgangssignal des Integrierers 2 addiert. Diese Vorwärtskopplung hat zur Folge, daß die Auswirkungen der Meßzeitkonstanten $T_m$ des Drehbeschleunigungsgebers auf die Funktion der Streckenbeobachterschaltung 101 vollständig kompensiert werden, d.h. daß nun exakt gilt

$$\alpha_G = \frac{d\omega_b}{dt} = \frac{d^2\varepsilon_b}{dt^2}.$$

Bei der in Fig. 14 dargestellten Ausführungsform bilden also $\alpha_G$, $\omega_b$ und $\varepsilon_b$ einen Satz kohärenter Zustandsgrößen.

Da das Blockschaltbild gemäß Fig. 14 sich von demjenigen gemäß Fig. 13 nur durch den Block 53 unterscheidet, der eingangsseitig mit dem Eingang der Streckenbeobachterschaltung 101 für das verzögerte Signal $\alpha_m$ und ausgangsseitig mit einem Summierpunkt verbunden ist, der zwischen dem Ausgang des Integrierers 2 und dem Abgriff für das Signal $\omega_b$ liegt, sind die einzelnen Komponenten der Streckenbeobachterschaltung 101 mit den gleichen Bezugszahlen gekennzeichnet wie bei dem Ausführungsbeispiel gemäß Fig. 13.

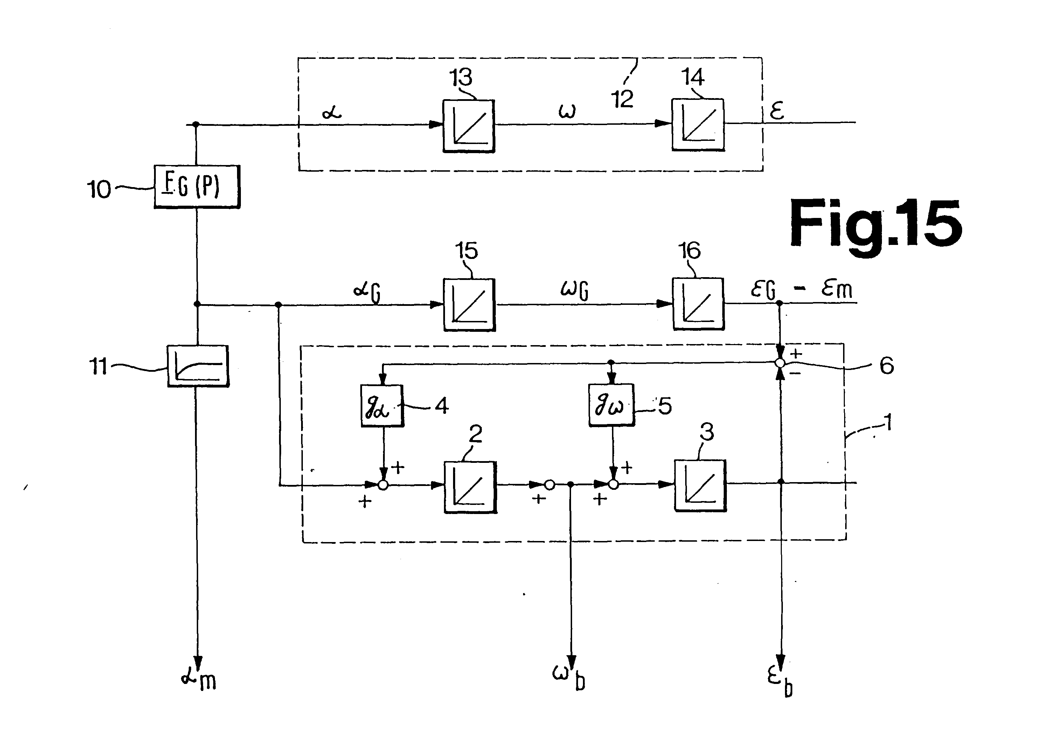

Das Verhalten der in Fig. 14 dargestellten Schaltungsanordnung ist nach außen völlig äquivalent zu dem Verhalten der in Fig. 15 dargestellten Ersatz-Schaltungsanordnung. Hier wird der Streckenbeobachterschaltung 1 direkt das unverzögerte, in der Realität jedoch nicht zugängliche Drehbeschleunigungssignal $\alpha_G$ als Eingangsgröße zugeführt. Im übrigen unterscheidet sich diese Schaltungsanordnung nicht von derjenigen gemäß Fig. 13, weshalb für weitere Einzelheiten auf die dort gemachten Ausführungen verwiesen werden kann.

Bei einer Signalaufbereitung mit einer Schaltungsanordnung gemäß Fig. 14 oder, äquivalent hierzu, gemäß Fig. 15 weicht das erfindungsgemäße Gebersystem nur noch in einem Punkt von dem in dem Fig. 1 dargestellten, idealen Gebersystem ab. Das vom realen

Gebersystem ausgehende Signal $\alpha_m$ für die Drehbeschleunigung folgt der am Ort der Messung tatsächlich herrschenden Drehbeschleunigung $\alpha_G$ nämlich verzögert gemäß dem Verhalten des Übertragungsgliedes 11, also eines Tiefpasses erster Ordnung mit der Zeitkonstanten $T_m$.

Dieses unerwünschte Tiefpaßverhalten des Drehbeschleunigungsgebers läßt sich auch bei bestmöglicher Optimierung desselben aus prinzipiellen Gründen nicht völlig vermeiden. Da die Zeitkonstante $T_m$ jedoch in der Regel sehr klein ist, beispielsweise 130 Mikrosekunden beträgt, ist sie in vielen Anwendungsfällen nicht störend, solange die Bedingung eingehalten wird, daß die Drehbeschleunigung $\alpha_G$ gleich der ersten Ableitung der Winkelgeschwindigkeit $\omega_b$ und der zweiten Ableitung der Winkellage $\varepsilon_b$ ist, wie dies bei der erfindungsgemäßen Signalaufbereitung gemäß Fig. 14 stets der Fall ist.

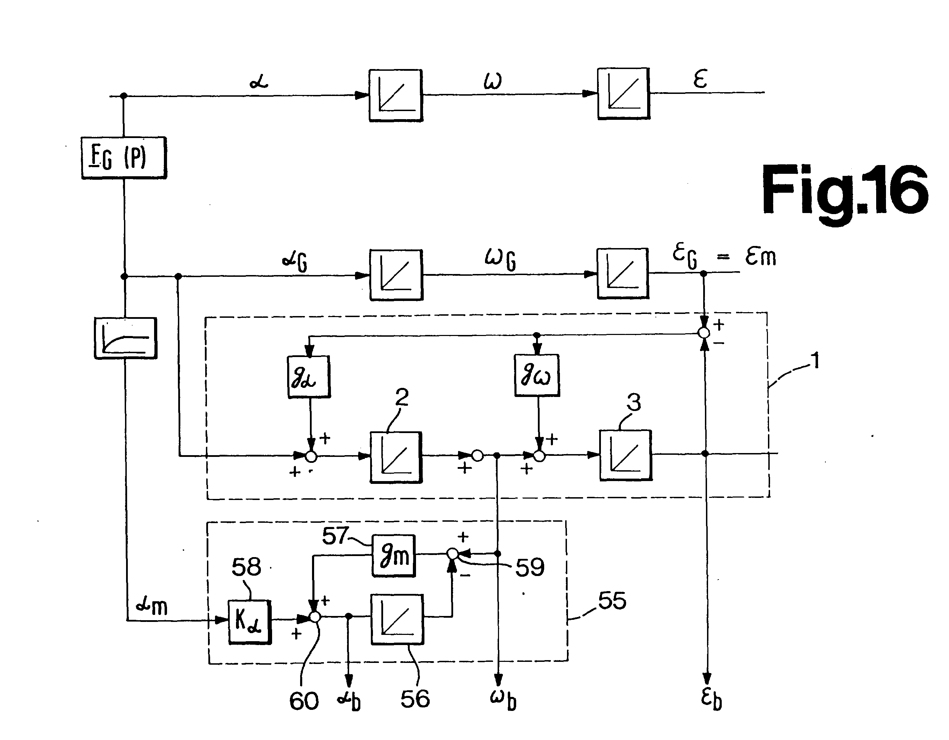

Sollte sich die Verzögerung des vom Gebersystem ausgegebenen Signals $\alpha_m$ gegenüber der am Ort der Messung tatsächlich herrschenden Drehbeschleunigung $\alpha_G$ dennoch störend auswirken, kann man mit der in Fig. 16 dargestellten Schaltungsanordnung die Meßverzögerung teilweise kompensieren. Das Ausführungsbeispiel gemäß Fig. 16 sieht zusätzlich zu der Streckenbeobachterschaltung 1 eine zweite Beobachterschaltung 55 vor, in welcher der Wert der Drehbeschleunigung synthetisiert wird. Die zweite Beobachterschaltung 55 besteht aus einem Integrierer 56 mit der Integrationszeitkonstanten $T_o$, einem Korrekturglied 57 mit der Verstärkung $g_m$ und einem Eingangsglied 58 mit der Verstärkung $k_\alpha$.

Am Ausgang des Integrierers 56 wird ein Wert für die Winkelgeschwindigkeit nachgebildet. Dessen Abweichung vom Referenzwert $\omega_b$, die an einem Vergleichspunkt 59 ermittelt wird, wird über das Korrekturglied 57 zurückgeführt und additiv mit dem durch das Eingangsglied 58 mit dem Faktor $k_\alpha$ verstärkten, verzögerten Signal $\alpha_m$ dem Eingang des Integrierers 56 zugeführt. Das Eingangssignal des Integrierers 56 wird als Nachbildung der tatsächlichen Beschleunigung $\alpha_G$ interpretiert und als beobachtetes Beschleunigungssignal $\alpha_b$ vom Gebersystem ausgegeben. Bei geeigneter Dimensionierung von $g_m$ und $k_\alpha$ ist $\alpha_b$ gegenüber $\alpha_G$ deutlich weniger verzögert als dies bei $\alpha_m$ gegeben ist.

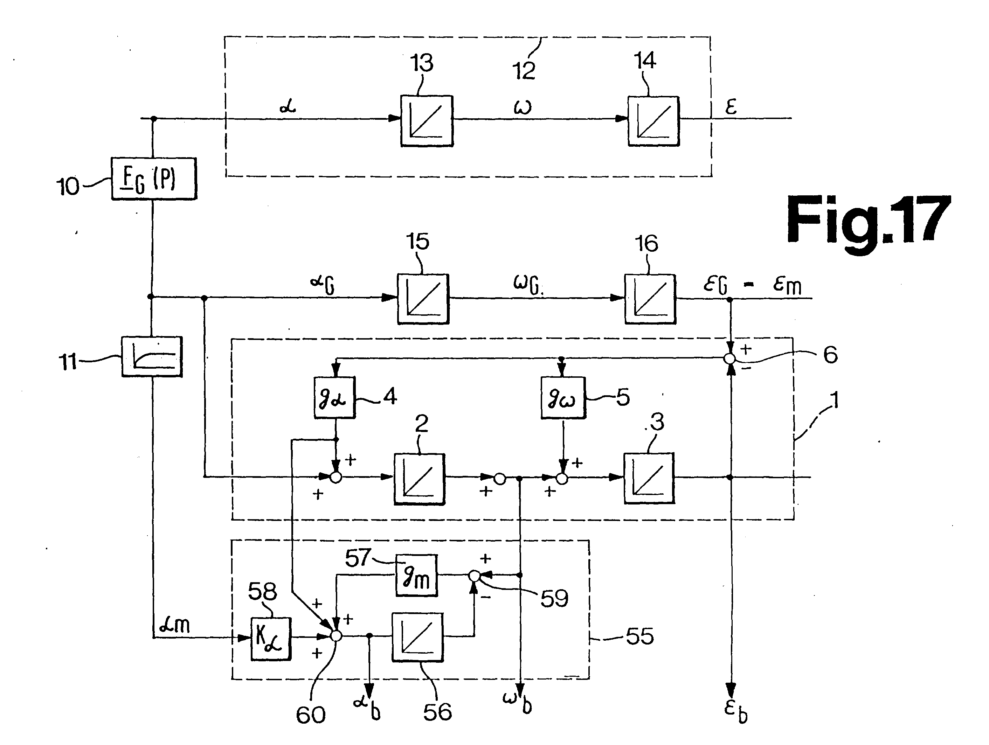

Eine weitere Verbesserung der in Fig. 16 dargestellten Ausführungsform zeigt Fig. 17. Hier wird an dem vor dem Eingang des Integrierers 56 vorgesehenen Summierpunkt 60 das Ausgangssignal des Korrekturgliedes 4 der Streckenbeobachterschaltung 1 aufgeschaltet. Im übrigen ist dieses Ausführungsbeispiel identisch mit demjenigen der Fig. 16.

Bei allen Ausführungsbeispielen kann, sofern gewünscht, statt des Wertes $\varepsilon_b$ der Winkellage auch der Wert $\varepsilon_G$ ausgegeben werden.

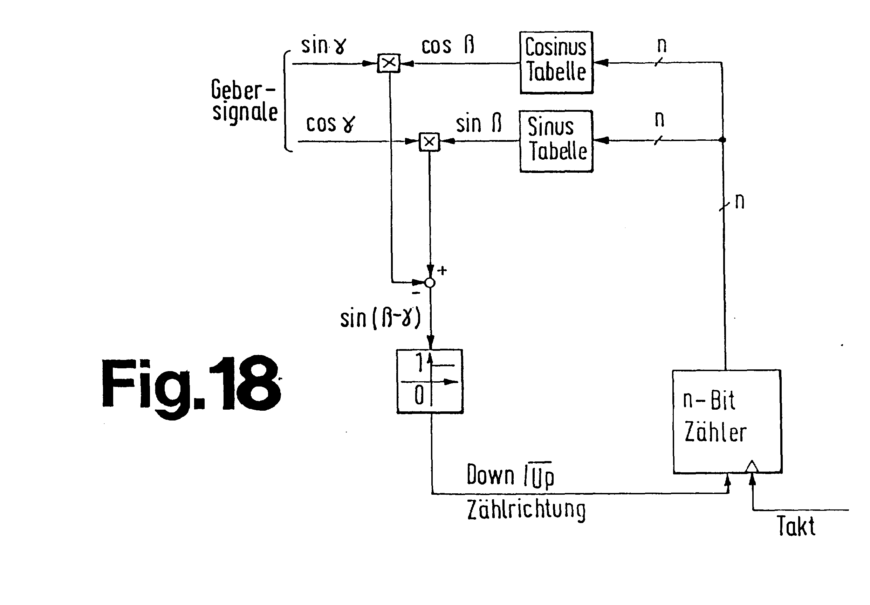

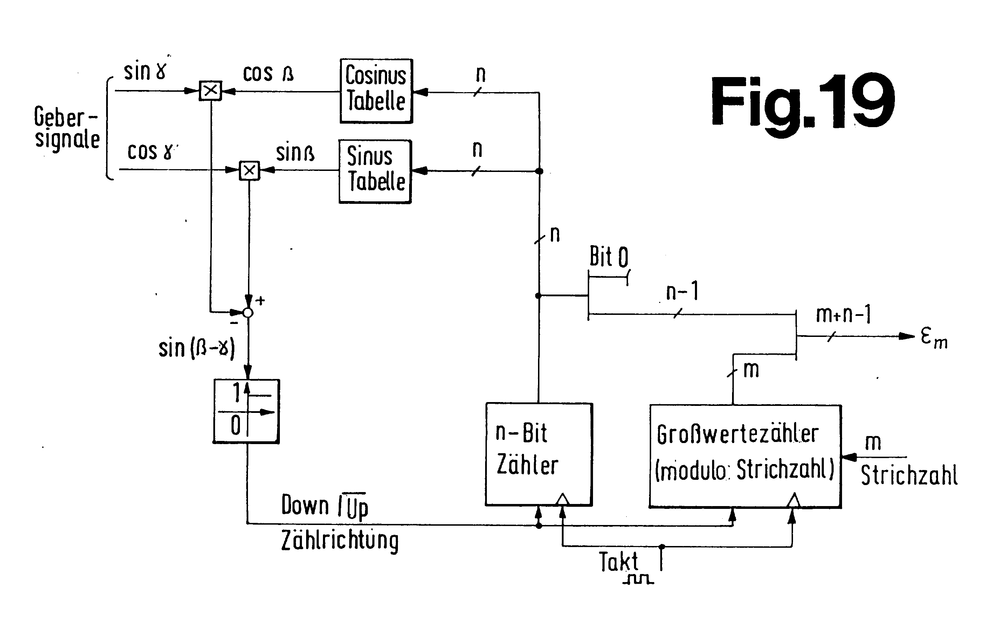

Die Auswertung der Signale des Winkellagegebers erfolgt durch ein Auszählen der Impulse oder, falls die Signalamplitude der Impulse einen sinusförmigen oder einen hierzu ähnlichen periodischen Verlauf hat, vorzugsweise mit bekannten Verfahren, für die in den Fig. 18 und 19 Blockschaltbilder dargestellt sind und die von dem Additionstheorem

$$\cos (\gamma) \cdot \sin (\beta) - \sin (\gamma) \cdot \cos (\beta) = \sin (\beta - \gamma)$$

Gebrauch machen. Es können damit auch Zwischenwerte der Winkellage innerhalb der durch die Markierungen definierten Segmentbereiche ermittelt werden.

Der Winkel $\gamma$ unterteilt den Segmentbereich zwischen zwei aufeinanderfolgenden Inkrementen des Gebers und nimmt Werte zwischen Null und $2\pi$ an. Der Wert $\beta$ ist eine digitale Nachbildung des Winkels $\gamma$. Der Wert $\varepsilon_m$ stellt den digitalen Lageistwert dar. Für ihn gilt

$$\varepsilon_m = \text{Inkrement} + \frac{\beta}{2\pi}.$$

Die gesamte Auswerteelektronik ist vorzugsweise in die Baueinheit integriert, welche die beiden Meßvorrichtungen für die Drehbeschleunigung und die Lage bilden. Die Auswerteschaltung kann rein analog, gemischt analog/digital oder, vorzugsweise, rein digital mit einem A/D-Wandler für $\alpha_m$ realisiert sein. Die Ausgabe der Meßwerte für die Winkellage und für die Winkelgeschwindigkeit erfolgt vorzugsweise digital. Die digitalen Werte werden vorzugsweise seriell ausgegeben. Die seriellen Ausgabedaten können über einen Lichtwellenleiter geführt werden.

Sofern eine Auswertung der Signale des Winkellagegebers aufgrund der Signalamplitude erfolgen soll, kann man eine ungerade Anzahl von optisch transparenten und weniger transparenten Bereichen oder von Zähnen und Zahnlücken vorsehen und die beiden Signalgeber diametral anordnen, wie dies bei den Ausführungsbeispielen gemäß den Fig. 3 bis 12 der Fall ist, so daß nicht von beiden Signalgebern gleichzeitig zwei Bereiche gleicher Transparenz oder zwei Zähne detektiert werden können. Dies läßt sich aber auch dadurch erreichen, daß die Signalgeber dementsprechend gegeneinander versetzt angeordnet werden.

Der als Meßscheibe oder Glockenläufer ausgebildete Teil der Meßvorrichtung für die Drehbeschleunigung ist vorzugsweise aus einem Werkstoff oder Werkstoffgemisch gefertigt, das eine hohe elektrische Leitfähigkeit mit einem geringen Temperaturkoeffizienten dieser Leitfähigkeit verbindet. Hierfür kommen insbesondere Legierungen, z.B. ISA 13, Manganin sowie andere Kupfer-Mangan-Legierungen, oder Kombinationen verschiedener Materialien in Frage.

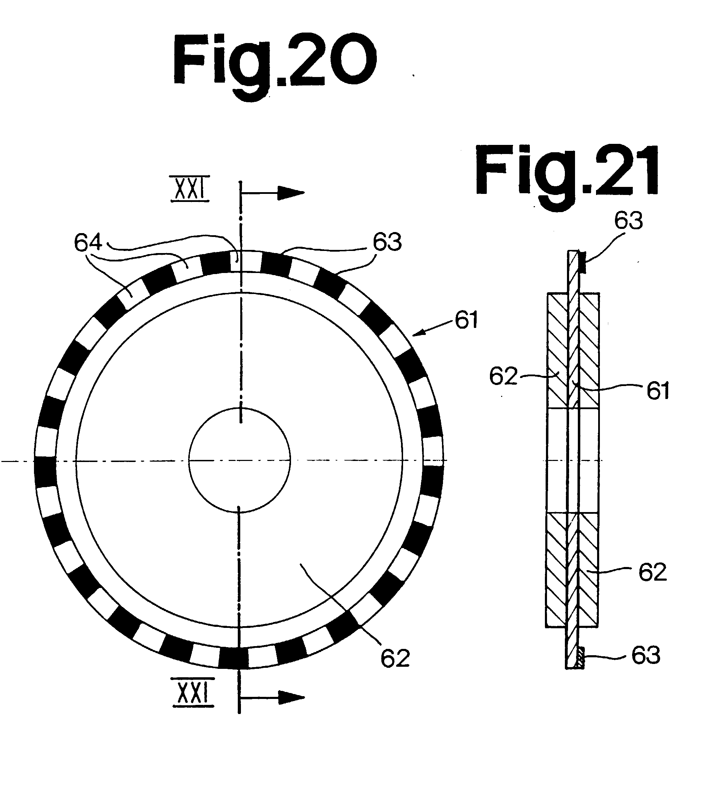

Bei den in den Fig. 3 bis 10 dargestellten Ausführungsformen des Rotationskörpers des Gebers für die Drehbeschleunigung können erwärmungsbedingte Deformationen zu einer Verfälschung des Meßsignales führen. Mit diesen Nachteilen ist ein in den Fig. 20 und 21 dargestelltes, bevorzugtes Ausführungsbeispiel nicht behaftet, bei dem eine aus transparentem Material, beispielsweise sehr dünnem Glas, bestehende Meßscheibe 61 als Signalgeber zur Ermittlung der Winkellage zwischen gleich ausgebildeten Scheiben 62 gleichachsig zu diesen angeordnet ist. Die drei Scheiben sind fest miteinander verbunden, beispielsweise verklebt, und bilden einen Stapel, der symmetrisch ist zu seiner in der Mitte zwischen den beiden Stirnflächen der Meßscheibe 61 liegenden Quermittenebene. Wie bei den zuvor beschriebenen Ausführungsbeispielen werden die beiden Scheiben 62, welche den Rotationskörper des Gebers für die Drehbeschleunigung bilden, in ihren beiden Hälften von entgegengesetzt gerichteten magnetischen Gleichfeldern durchsetzt. Die über den äußeren Umfang der beiden Scheiben 62 überstehende Randzone der Meßscheibe 61 ist im Wechsel lichtundurchlässigen und lichtdurchlässigen Bereichen 63 bzw. 64 versehen. In Fig. 21 ist das lichtundurchlässige Material, das in den lichtundurchlässigen Bereichen 63 auf die Meßscheibe 61 aufgebracht ist, übertrieben dick dargestellt.

Damit das Ausgangssignal des Gebers für die Drehbeschleunigung möglichst wenig von der Temperatur der Scheiben 62 abhängig ist, bestehen sie aus einer Kupfer-Mangan-Legierung. Außer von der Winkelgeschwindigkeit des Rotationskörpers der nach dem Ferrares-Prinzip arbeitenden Meßvorrichtung für die Drehbeschleunigung hängt nämlich der Betrag der in Rede stehenden Wirbelströme insbesondere auch vom elektrischen Leitwert des Rotationskörpers ab. Der Proportionalitätsfaktor zwischen der tatsächlichen Drehbeschleunigung und der im dynamisch eingeschwungenen Zustand der Meßeinrichtung an den Meßspulen abgreifbaren Signalspulen für die Drehbeschleunigung ist also ebenfalls eine Funktion dieses elektrischen Leitwertes.

Bei allen bisher beschriebenen Ausführungsbeispielen wurde unterstellt, daß der genannte Proportionalitätsfaktor sich nicht verändert und daß demzufolge für die normierten Größen $\alpha_G$ (der am Ort der Meßeinrichtung tatsächlich herrschenden Drehbeschleunigung) und $\alpha_m$ (dem vom Drehbeschleunigungsgeber ausgegebenen Meßwert für diese Drehbeschleunigung ( im dynamisch eingeschwungenen Zustand der Meßeinrichtung der Zusammenhang

$$\alpha_{G_{stat}} = \alpha_{m_{stat}}$$

gilt. Dies ist beispielsweise aus den Fig. 1, 2 und 13 bis 17 ersichtlich.

Tatsächlich ist der elektrische Leitwert des die Signalgeber bildenden Rotationskörpers jedoch nicht konstant, sondern eine Funktion von dessen Temperatur, die während des Betriebes des in Rede stehenden Gebersystems erheblich schwanken kann. Infolge der durch die Wirbelströme im Rotationskörper hervorgerufenen Verluste ist die Temperatur nach einem längeren Betrieb mit hoher Drehzahl nämlich deutlich größer als nach einem längeren Stillstand.

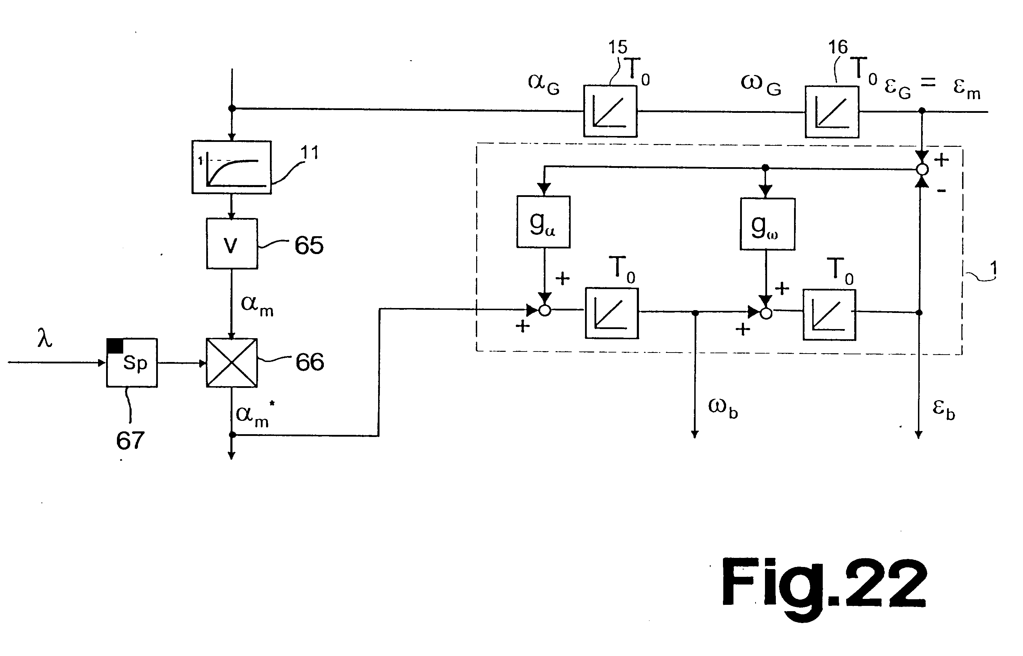

Um diesem Umstand Rechnung zu tragen, ist in Bild 1a gegenüber der Fig. 22 zusätzlich ein Block 65 vorgesehen, der eine normierte Meßgliedverstärkung v berücksichtigt. Diese Meßgliedverstärkung v besitzt einen von der Temperatur $\vartheta$ des Rotationskörpers abhängigen, in der Nähe von Eins liegenden Wert. Es ist

$$v = v(\vartheta) \approx 1.$$

Infolgedessen gilt für die normierten Größen $\alpha_G$ (der am Ort der Meßeinrichtung tatsächlich herrschenden Drehbeschleunigung) und $\alpha_m$ (dem vom Drehbeschleunigungsgeber ausgegebenen Meßwert für diese Drehbeschleunigung) im dynamisch eingeschwungenen Zustand der Meßeinrichtung der Zusammenhang

$$\alpha_{m_{stat}} = v \cdot \alpha_{G_{stat}} .$$

Alle folgenden Erläuterungen sollen beispielhaft anhand von Fig. 22 erfolgen, welche im wesentlichen auf Fig. 13 beruht, weshalb übereinstimmende Blöcke mit gleichen Bezugszahlen gekennzeichnet sind und ergänzend zu den folgenden Ausführungen auf die Erläuterungen zu Fig. 13 Bezug genommen wird. Ebenso können die im folgenden beschriebenen Maßnahmen aber auch auf die in Fig. 14, 15, 16 und 17 dargestellten Systeme angewandt werden.

Die angesprochene Temperaturabhängigkeit der Meßgliedverstärkung v kann sehr klein gehalten werden, wenn der Rotationskörper aus einem geeigneten Material gefertigt wird. Besonders vorteilhaft sind beispielsweise bestimmte Kupfer-Mangan-Legierungen, die einen hohen elektrischen Leitwert mit einem geringen Temperaturkoeffizienten dieses Leitwerts verbinden. Dann beträgt die Änderung der Meßgliedverstärkung v im üblicherweise auftretenden Temperaturbereich von 25° - 100° C lediglich ca. 5%.

Außerdem darf der Absolutwert der gemessenen Drehbeschleunigung bei sehr vielen Anwendungen der erfindungsgemäßen Einrichtung relativ große Toleranzen aufweisen. Als Beispiel hierfür seien Positionsregelsysteme mit unterlagerter Beschleunigungsregelung genannt, bei denen eine kleine Abweichung der Meßgliedverstärkung v vom Wert Eins nur ein geringfügig verändertes Einschwingverhalten des Regelsystems zur Folge hat.

Es gibt aber auch Anwendungen des erfindungsgemäßen Gebersystems, beispielsweise beim Einsatz in Prüfständen für Verbrennungsmotoren, bei denen ein vorgegebenes Beschleunigungsprofil exakt eingehalten werden muß. Hier werden sehr hohe Anforderungen an die statische Genauigkeit des Meßwerts für die Drehbeschleunigung gestellt.

Mit den im folgenden beschriebenen, ergänzenden Maßnahmen läßt sich die statische Genauigkeit des Meßwerts für die Drehbeschleunigung gegenüber den bisher beschriebenen Ausführungsbeispielen deutlich verbessern.

Der Grundgedanke dieser ergänzenden Maßnahmen soll anhand von Fig. 22 erläutert werden. Er besteht darin, den gemessenen, mit der (temperaturabhängigen) Meßgliedverstärkung v behafteten Wert $\alpha_m$ für die Drehbeschleunigung in einer Multipliziereinrichtung 66 mit dem Korrekturfaktor $\lambda$ zu multiplizieren, der derart einzustellen ist, daß das von der Multipliziereinrichtung 66 ausgegebene, modifizierte Drehbeschleunigungssignal $\alpha_m^*$ statisch exakt die am Ort der Meßvorrichtung herrschende tatsächliche Drehbeschleunigung $\alpha_G$ wiedergibt. Dazu muß gelten:

$$\lambda = \frac{1}{v}.$$

Wird der Korrekturfaktor $\lambda$ entsprechend obiger Vorschrift eingestellt, so gilt für die normierten Größen $\alpha_G$ (der am Ort der Meßeinrichtung tatsächlich herrschenden Drehbschleunigung) und $\alpha_m^*$ (dem von der Multipliziereinrichtung 66 ausgegebenen modifizierten Drehbeschleunigungssignal) im dynamisch eingeschwungenen Zustand der Meßeinrichtung unabhängig von der Temperatur des Rotationskörpers der Zusammenhang

$$\alpha_{G_{stat}} = \alpha_{m_{stat}}^*.$$

Dieser Umstand wird in vorteilhafter Weise dazu verwendet, daß überall dort, wo im erfindungsgemäßen Gebersystem bisher der gemessene, mit der (temperaturabhängigen) Meßgliedverstärkung v behaftete Wert $\alpha_m$ für die Drehbeschleunigung Verwendung findet, jetzt das von der Multipliziereinrichtung 66 ausgegebene modifizierte Drehbeschleunigungssignal $\alpha_m^*$ verwendet wird.

Für die Generierung des Korrekturfaktors $\lambda$ stehen verschiedene Möglichkeiten zur Verfügung:

Eine erste Möglichkeit besteht darin, den bei bekannter Abhängigkeit der Meßgliedverstärkung v von der Temperatur des Rotationskörpers und bei bekannter Temperatur des Rotationskörpers in einfacher Weise zufolge der Beziehung $\lambda = \frac{1}{v}$ zu generieren. Die Abhängigkeit der Meßgliedverstärkung v von der Temperatur des Rotationskörpers ist für das verwendete Material des Rotationskörpers meßtechnisch zu bestimmen und kann dann beispielsweise in einem eindimensionalen Kennfeld in einem Speicher 67 abgelegt werden.

Zur Ermittlung der Temperatur des Rotationskörpers können folgende Maßnahmen angewendet werden:

a) Die Temperatur des Rotationskörpers wird direkt mit Hilfe eines berührungslos arbeitenden Temperaturmeßgeräts ermittelt, welches die vom Rotationskörper emittierte Infrarot-Strahlung auswertet.

b) Die Temperatur des Rotationskörpers wird mittelbar über die Erfassung der Lufttemperatur in nächster Umgebung des Rotationskörpers mit Hilfe eines Temperatursensors gemessen, welcher auf seiner Montagefläche thermisch isoliert angebracht ist.

c) Die Temperatur des Rotationskörpers kann mit Hilfe eines thermischen Modells für den Rotationskörper und seine Umgebung elektronisch synthetisiert werden. Das thermische Verhalten des Rotationskörpers und seiner Umgebung wird hierzu durch ein Wärmequellennetz mit konzentrierten Wärmeleitwerten und Wärmekapazitäten nachgebildet. Dabei werden einzelne Gebiete des Rotationskörpers und seiner Umgebung als homogen betrachtet und deren mittlere Temperatur jeweils einem Knoten des Wärmequellennetzes geordnet. Die thermische Kopplung der einzelnen Gebiete untereinander wird durch konzentrierte Wärmeleitwerte berücksichtigt. Die Wärmekapazität der Gebiete wird durch konzentrierte Wärmekapazitäten repräsentiert. Die Verlustleistungen in den einzelnen Gebieten werden an den jeweiligen Knoten des Netzes als Wäremquellen angesetzt (Anlage 4).

Eine zweite Möglichkeit besetht darin, den Korrekturfaktor unter Verwendung einer geeigneten Regelschaltung aus gemessenen und/oder synthetisierten Größen zu generieren.

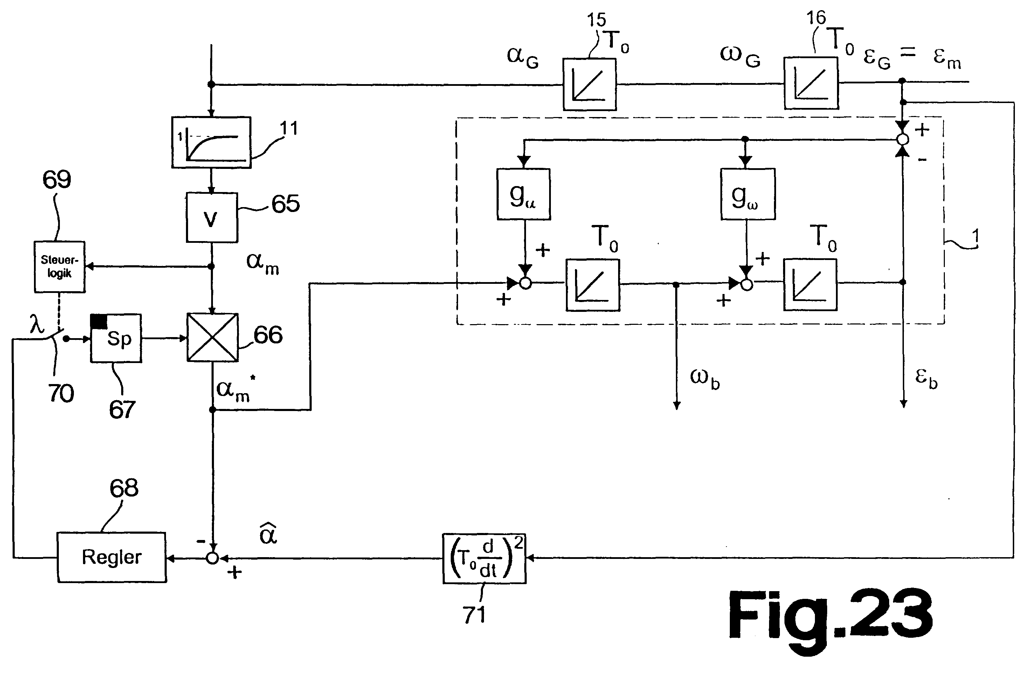

Diese Möglichkeit soll anhand von Fig. 23 erläutert werden. Dort wird davon Gebrauch gemacht, daß die Winkellage $\varepsilon_G$ des rotierenden Bauteils sehr genau und ohne prinzipbedingte Temperatureinflüsse gemessen werden kann und als Meßwert $\varepsilon_m$ zur Verfügung steht. Es ist daher möglich, den exakten Wert der Drehbeschleunigung $\alpha_G$ über eine zweifache Differentiation des Meßwerts $\varepsilon_m$ mittels eines Differenziergliedes 79 für die Winkellage zu gewinnen. Eine derartige zweifache Differentiation kann allerdings in der Praxis nicht völlig ideal erfolgen, sondern muß zur Unterdrückung hochfrequenter Störsignale, die durch eine ideale Differentiation erheblich verstärkt würden, deutlichen Tiefpaßcharakter aufweisen. Eine solchermaßen gewonnene Drehbeschleunigungsnachbildung $\hat{\alpha}$ folgt der tatsächlichen Drehbeschleunigung $\alpha_G$ infolgedessen mit einer Zeitverzögerung, die eine direkte Verwendung dieser Nachbildung $\hat{\alpha}$ ausschließt.

Die Drehbeschleunigungsnachbildung $\hat{\alpha}$ weist jedoch bei einem Betrieb mit von Null verschiedener, konstanter oder nahezu konstanter Drehbeschleunigung, dessen Zeitdauer deutlich größer ist als die vorgenannte Zeitverzögerung, die gewünschte statische Genauigkeit auf.

Wird ein länger andauernder Betrieb mit von Null verschiedener, konstanter oder nahezu konstanter Drehbeschleunigung von der Steuerlogik 69 erkannt, so wird mit Hilfe eines Reglers 68 einer Regelschaltung, in welcher der Korrekturfaktor $\lambda$ die Stellgröße ist, das modifizierte Drehbeschleunigungssignal $\alpha_m^*$ der Drehbeschleunigungsnachbildung $\hat{\alpha}$ nachgeführt. Die Lösung hat allerdings den Nachteil, daß der von der Steuerlogik 69, die von dem Ausgangssignal $\alpha_m$ des Signalerfassungssystems für die Drehbeschleunigung angesteuert wird, betätigte Schalter 70 nur dann geschlossen werden und damit eine Nachführung erfolgen kann, wenn der Meßwert $\alpha_m$ zum einen nennenswert von Null verschieden ist und zum anderen einen konstanten oder nahezu konstanten Wert aufweist.

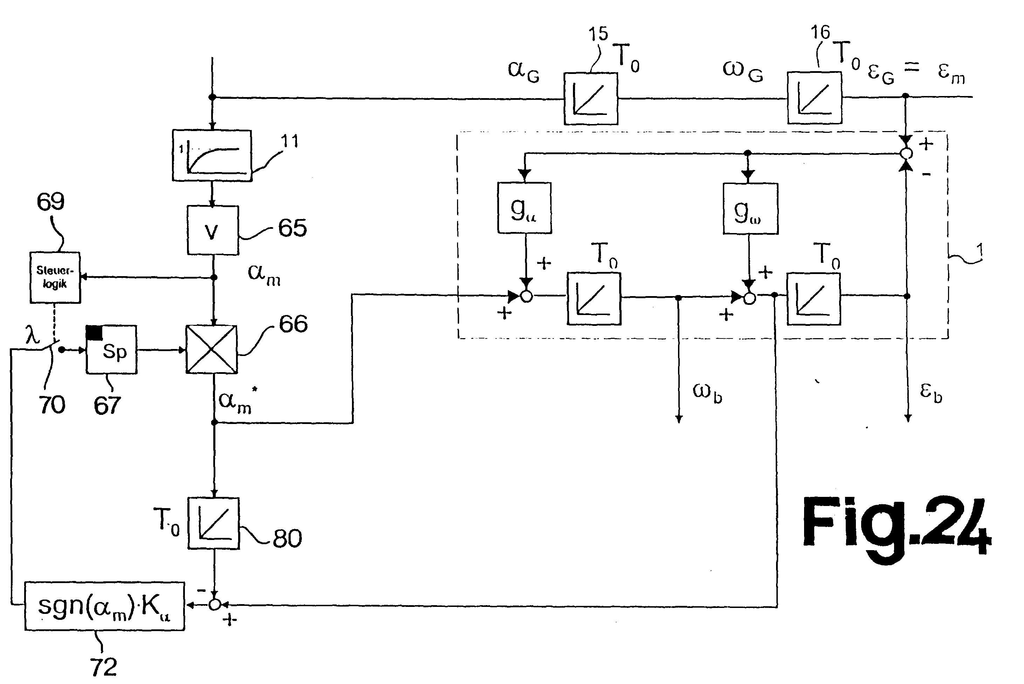

Die letztgenannte Einschränkung entfällt, wenn eine in Fig. 24 dargestellte, bevorzugte Anordnung verwendet wird. Die in Fig. 24 dargestellte Regelschaltung enthält einen Regler 72, welcher den Verstärkungsfaktor sgn($\alpha_m$).$K_\alpha$ aufweist. Dem Regler 71 wird an seinem Eingang die Differenz aus dem einmal differenzierten Heßwert $\varepsilon_m$ für die Winkellage (also das Signal $T_0 \frac{d\varepsilon_m}{dt}$), und mittels eines Integriergliedes 80 dem einmal integrierten modifizierten Drehbeschleunigungssignal $\alpha_m^*$ (also das Signal $\frac{1}{T_0} \int \alpha_m^* \, dt$), zugeführt. Dabei kann das erstgenannte Signal $T_0 \frac{d\varepsilon_m}{dt}$ in einfacher Weise direkt am Eingang des im Beobachter 1 enthaltenen zweiten Integrierers 3 abgegriffen werden. In dieser bevorzugten Ausführungsform gemäß Fig. 24 wird also jegliche zusätzliche Differentiation vermieden. Dadurch kann im Regler 72 auf die sonst erforderliche Tiefpaßeigenschaft verzichtet werden. Desweiteren kann die Steuerlogik 69 als einfacher Schwellwertschalter für den Betrag des vom Drehbeschleunigungsgeber ausgegebenen Meßwerts $\alpha_m$ ausgeführt werden, welcher den Schalter 70 also immer dann schließt, wenn der Betrag des vom Drehbeschleunigungsgeber ausgegebenen Meßwerts $\alpha_m$ einen vorgegebenenen Schwellwert überschreitet.

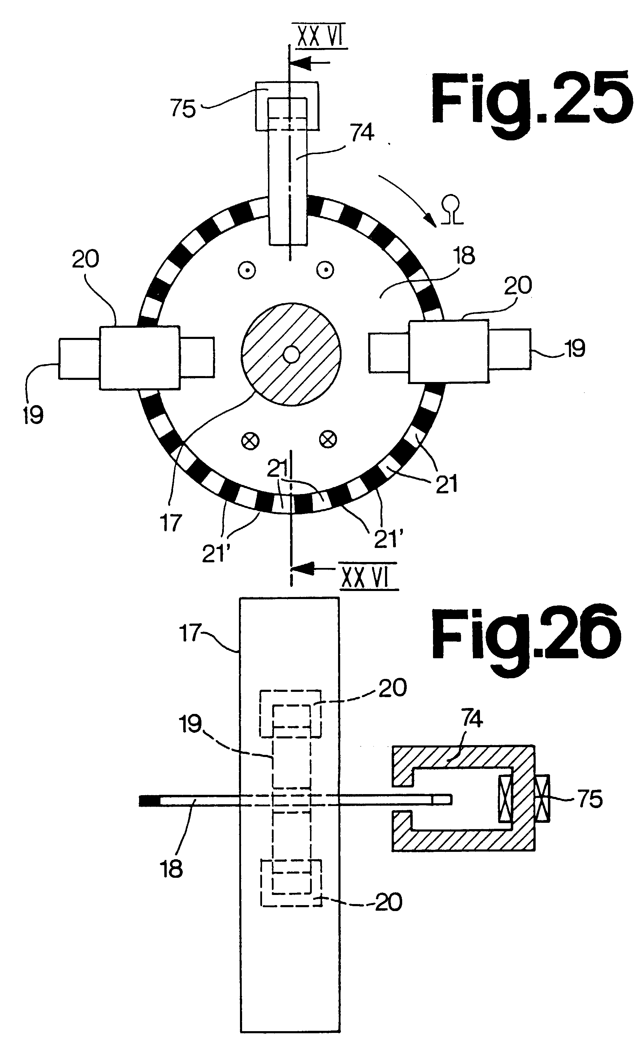

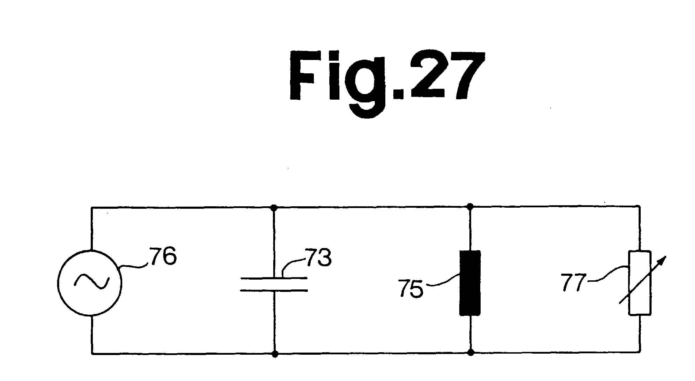

Bei einer dritten Möglichkeit wird der Korrekturfaktor $\lambda$ über eine meßtechnische Bestimmung des aktuellen, temperaturabhängigen elektrischen Leitwertes des Rotationskörpers generiert. Letzterer kann beispielsweise mit Hilfe der in den Fig. 25 bis 27 dargestellten Anordnung durch Messung der Dämpfung eines Schwingkreises ermittelt werden. Dieser Parallelschwingkreis ist an eine Energiequelle 76 angeschlossen und weist außer einem Kondensator 73 eine Induktivität auf, die ihrerseits aus einem bis auf einen einzigen Luftspalt geschlossenen Magnetflußleitkörper 74 mit einer Spule 75 besteht. In den Luftspalt des Magnetflußleitkörpers 74 greift der scheibenförmige Rotationskörper 18 ein, dessen Temperatur gemessen werden soll. In Fig. 27 ist wegen des temperaturabhängigen Widerstandes des Rotationskörpers, der die temperaturabhängige Dämpfung ergibt, außer der Spule 75 auch ein veränderlicher ohmscher Widerstand 77 dargestellt. Wie Fig. 25 zeigt, ist der Magnetflußleitkörper 74, der im Prinzip wie die beiden Magnetflußleitkörper 19 ausgebildet ist, zwischen diesen angeordnet. Der Geber gemäß den Fig. 25 bis 27 unterscheidet sich von denjenigen gemäß den Fig. 3 und 4 also nur dJrch den Schwingkreis.

Über den bekannten, einmal ermittelten Zusammenhang zwischen diesem Leitwert und der letztlich interessierenden Meßgliedverstärkung v kann dann $\lambda$ gemäß der Beziehung $\lambda = \frac{1}{v}$ ermittelt werden.

**Patentansprüche**

1. Gebersystem zur Ermittlung wenigstens einer der drei Größen Drehbeschleunigung, Winkelgeschwindigkeit oder Winkellage eines rotierenden Bauteils (17, 23, 30, 38, 49) mit

    a) zwei mit dem Bauteil (17, 23, 30, 38, 49) zu verbindenden Signalgebern (18; 24; 28, 29; 37; 45, 48; 61, 62), die drehstarr miteinander verbunden sowie als mechanische Einheit ausgebildet sind,
    b) den Signalgebern (18; 24; 28, 29; 37; 45, 48; 61, 62) zugeordneten Signalerfassungssystemen (19, 20, 22; 25, 26, 27; 31, 36, 36'; 40, 41, 44; 46, 47, 52), welche die Meßgrößen für die Drehbeschleunigung und die Winkellage liefern, und
    c) einer Auswerteschaltung für die Meßgrößen, die eine Streckennachbildung (1) aufweist, welche mit Hilfe einer ersten (2) und einer auf diese folgenden zweiten Integrationsstufe (3) die Werte für wenigstens die Winkelgeschwindigkeit nachbildet.

2. System nach Anspruch 1, dadurch gekennzeichnet, daß die beiden Signalgeber durch unterschiedliche Bereiche eines einteiligen Körpers (18; 37) gebildet sind.

3. System nach Anspruch 1, dadurch gekennzeichnet, daß die mechanische Einheit mehrteilig ausgebildet ist und wenigstens eine zur Rotationsachse des rotierenden Bauteils (23; 30; 49) konzentrisch angeordnete Scheibe (24; 28, 29; 48; 61, 62) aufweist.

4. System nach Anspruch 3, dadurch gekennzeichnet, daß die mechanische Einheit aus einem Verbund mehrerer gleichachsig angeordneter Scheiben (28, 29; 61, 62) besteht, von denen wenigstens eine (28; 62) den Signalgeber für die Drehbeschleunigung und wenigstens eine andere (29; 61) den Signalgeber für die Winkellage bildet.

5. System nach einem der Ansprüche 1 bis 4, gekennzeichnet durch eine drehstarre Verbindung der mechanischen Einheit mit dem rotierenden Bauteil (17;

23; 30; 38; 49).

6. System nach einem der Ansprüche 1 bis 5, dadurch gekennzeichnet, daß die Auswerteschaltung (1) wenigstens eine Zusatzschaltung (53, 55) zur zumindest teilweisen Kompensation der zeitlichen Verzögerung des Ausgangssignals ($\alpha_m$) des Signalerfassungssystems für die Drehbeschleunigung gegenüber der tatsächlichen Drehbeschleunigung ($\alpha_G$) enthält.

7. System nach Anspruch 6, dadurch gekennzeichnet, daß die Zusatzschaltung (53, 55) eine Gewichtungsschaltung (53) aufweist, die das vom Signalerfassungssystem für die Drehbeschleunigung gelieferte Signal ($\alpha_m$) mit dem Quotienten aus der Meßzeitkonstanten ($T_m$) dieses Signalerfassungssystem und der Integrationszeitkonstanten ($T_o$) der ersten Integrationsstufe (2) gewichtet und in Form einer Vorwärtskopplung zum Ausgangssignal der ersten Integrationsstufe (2) addiert wird.

8. System nach Anspruch 7, dadurch gekennzeichnet, daß die Zusatzschaltung eine Beobachterschaltung (55) aufweist, die aus einem verstärkenden Eingangsglied (58), an dem das von der Meßvorrichtung für die Drehbeschleunigung gelieferte Signal ($\alpha_m$) anliegt, einer dem Eingangsglied (58) nachgeschalteten Integrationsstufe (56) und einem die Differenz aus dem Ausgangssignal ($\omega_b$) des Integrierers (2) der Streckennachbildung und dem Ausgangssignal dieser Integrationsstufe (56) auf deren Eingang zurückführenden, verstärkenden Korrekturglied (57) besteht und mittels deren ein Drehbeschleunigungswert ($\alpha_b$) gebildet wird, der gegenüber dem tatsächlichen Wert ($\alpha_G$) weniger verzögert ist als der von der Meßvorrichtung für die Drehbeschleunigung ausgegebene Wert.

9. System nach Anspruch 8, dadurch gekennzeichnet, daß auf den Eingang der Integrationsstufe (56) der Beobachterschaltung (55) das Ausgangssignal eines Korrekturgliedes (4) aufgeschaltet ist, dessen Ausgangssignal additiv zum Drehbeschleunigungssignal auch als Eingangssignal für den Integrierer (2) einer Streckenbeobachterschaltung (1) wirkt und dessen Eingangssignal die Differenz aus dem Meßsignal ($\epsilon_G$) für die Winkellage und dem Ausgangssignal des Integrierers (3) der Streckenbeobachterschaltung (1) ist.

10. System nach einem der Ansprüche 1 bis 9, dadurch gekennzeichnet, daß die Auswerteschaltung rein digital ausgeführt ist.

11. System nach einem der Ansprüche 1 bis 10, gekennzeichnet durch eine serielle Ausgabe der digitalen Werte der Auswerteschaltung.

12. System nach Anspruch 11, dadurch gekennzeichnet, daß die Auswerteschaltung wenigstens einen elektrooptischen Ausgang aufweist, an den ein Lichtwellenleiter anschließbar ist.

13. System nach einem der Ansprüche 1 bis 12, dadurch gekennzeichnet, daß die Auswerteschaltung in die Baueinheit integriert ist.

14. System nach einem der Ansprüche 1 bis 13, dadurch gekennzeichnet, daß der Geber für die Drehbeschleunigung als ein nach dem Ferraris-Prinzip arbeitender analoger Geber mit einem Rotationskörper in Form einer Scheibe (18, 24, 28) oder einem Hohlzylinder (37, 45) aus einem elektrisch leitenden, nicht ferromagnetischen Material ausgebildet ist, der von einem ortsfesten Magnetgleichfeld in der einen Hälfte in der einen und in der anderen Hälfte in der anderen Richtung durchsetzt wird, sowie als Signalerfassungssystem mindestens einen Magnetflußsensor (19, 20; 25, 26; 36, 36'; 40, 41; 46, 47) aufweist, der von dem mit den im Rotationskörper fließenden Wirbelströmen verketteten Magnetfluß durchsetzt wird, und wenigsten eine Spule (20; 26; 36'; 41; 47) aufweist, in welcher eine Änderung dieses Magnetflusses eine elektrische Spannung induziert.

15. System nach Anspruch 14, dadurch gekennzeichnet, daß der Magnetflußsensor einen bis auf einen Luftspalt geschlossenen Flußleitkörper (19; 25; 36; 40; 46) aufweist, in dessen Luftspalt der zwischen den vom magnetischen Gleichfeld durchsetzten Bereichen liegende Teil des rotierenden Körpers liegt.

16. System nach Anspruch 14 oder 15, dadurch gekennzeichnet, daß der Signalgeber für die Drehbeschleunigung wenigstens eine zweite Scheibe (62) aus elektrisch leitendem, nicht ferromagnetischem Material aufweist, zwischen der und der ersten Scheibe (62) die der Ermittlung der Winkellage dienende, auch mit der zweiten Scheibe (62) starr gekoppelte Scheibe (61) angeordnet ist.

17. System nach Anspruch 16, dadurch gekennzeichnet, daß der aus den Scheiben (61, 62) gebildete Stapel symmetrisch zu seiner Quermittenebene ausgebildet ist und die erste und zweite Scheibe (62) aus dem gleichen Material bestehen.

18. System nach Anspruch 16 oder 17, dadurch gekennzeichnet, daß die erste und die zweite Scheibe (62) aus einem Material mit kleinem Temperaturkoeffizienten bestehen.

19. System nach einem der Ansprüche 1 bis 18, dadurch gekennzeichnet, daß eine Randzone (21, 24", 42, 43) der einen Rotationskörper (18, 24, 37) bildenden mechanischen Einheit als Signalgeber zur Ermittlung der Winkellage ausgebildet ist.

20. System nach Anspruch 19, dadurch gekennzeichnet, daß die als Signalgeber zur Ermittlung der Winkellage ausgebildete Randzone im Wechsel für das verwendete Licht optisch durchlässige (21; 32; 43; 50') und optisch undurchlässige oder weniger durchlässige Bereiche (21', 33, 42, 50) bildet und im Strahlengang einer Lichtschranke (22; 31; 44; 52) liegt.

21. System nach Anspruch 19 oder 20, dadurch gekennzeichnet, daß der Signalgeber zur Ermittlung der Winkellage durch eine Scheibe (61) aus Glas gebildet ist, die in ihrer äußeren Randzone mit lichtunduchlässigen Segmenten (63) oder lichtundurchlässigen Strichen versehen ist.

22. System nach einem der Ansprüche 1 bis 21, dadurch gekennzeichnet, daß das Ausgangssignal ($\alpha_m$) des Signalerfassungssystems für die Drehbeschleunigung in einer Multipliziereinrichtung (66) mit einem die Temperaturabhängigkeit des Ausgangssignals ($\alpha_m$) kompensierenden Korrekturfaktor ($\lambda$) multipliziert wird.

23. System nach Anspruch 22, dadurch gekennzeichnet, daß für den Korrekturfaktor ($\lambda$) die Beziehung

$$\lambda = \frac{1}{v}$$

gilt, wobei v die temperaturabhängige Meßgliedverstärkung des Signalerfassungssystems für die Drehbeschleunigung bedeutet.

24. System nach Anspruch 23, dadurch gekennzeichnet, daß der Eingang der Multipliziereinrichtung (66) für den Korrekturfaktor ($\lambda$) an einen Speicher (67) angeschlossen ist, in dem die meßtechnisch oder mittels eines thermischen Modells für den Rotationskörper der Meßvorrichtung und seine Umgebung ermittelte Abhängigkeit der Meßgliedverstärkung (v) von der Temperatur abgelegt ist.

25. System nach Anspruch 24, gekennzeichnet durch eine Regelschaltung, in welcher der Korrekturfaktor ($\lambda$) die Stellgröße ist und mittels deren während einer von Null verschiedenen, wenigstens nahezu konstanten Drehbeschleunigung das am Ausgang der Multipliziereinrichtung (66) zur Verfügung stehende, modifizierte Drehbeschleunigungssignal ($\alpha_m^*$) einen durch eine zweifache Differentiation des die Winkellage kennzeichnenden Signals ($\varepsilon_G$) gewonnene Drehbeschleunigungs-Nachbildung ($\hat{\alpha}$) nachgeführt wird.

26. System nach Anspruch 24, gekennzeichnet durch eine Regelschaltung mit einem Regler (71), der den Verstärkungsfaktor sgn($\alpha_m$).$K_\alpha$ aufweist und an dessen Eingang ein Signal anliegt, das gleich der Differenz aus dem einmal differenzierten Meßwert ($\varepsilon_m$) für die Winkellage und dem einmal integrierten modifizierten Drehbeschleunigungssignal ($\alpha_m^*$) ist.

27. System nach Anspruch 26, dadurch gekennzeichnet, daß der einmal differenzierte Meßwert ($\varepsilon_m$) für die Winkellage am Eingang des zweiten Integrierers (3) der Streckenbeobachterschaltung (1) abgegriffen wird.

28. System nach einem der Ansprüche 25 bis 27, gekennzeichnet durch eine Steuerlogik (69), an deren Eingang das Ausgangssignal ($\alpha_m$) des Signalerfassungssystems für die Drehbeschleunigung anliegt und die den Regelkreis nur bei einer von Null verschiedenen, zumindest annähernd konstanten Drehbeschleunigung schließt.

29. System nach Anspruch 28, dadurch gekennzeichnet, daß die Steuerlogik (69) durch einen auf den Betrag des Ausgangssignals ($\alpha_m$) des Signalerfassungssystems für die Drehbeschleunigung ansprechenden Schwellenwertschalter gebildet ist.

30. System nach Anspruch 24, gekennzeichnet durch einen Schwingkreis mit einer von der Temperatur des Rotationskörpers (18) der Meßvorrichtung für die Drehbeschleunigung abhängigen Dämpfung.

31. System nach Anspruch 30, dadurch gekennzeichnet, daß die Induktivität des Schwingkreises einen bis auf einen Luftspalt geschlossenen Magnetflußleitkörper (74) aufweist, in dessen Luftspalt der Rotationskörper (18) des Signalerfassungssystems für die Drehbeschleunigung eingreift.

## Claims

1. Sensor system for determining at least one of the three parameters, angular acceleration, angular velocity, or angular position, of a rotating element (17, 23, 30, 38, 49), with

    a) two signal transducers (18; 24; 28, 29; 37; 45, 48; 61, 62), connected rigidly for rotation with one another and constructed as a mechanical unit, for connection to the element (17, 23, 30, 38, 49),

    b) signal-acquisition systems (19, 20, 22; 25, 26, 27; 31, 36, 36'; 40, 41, 44; 46, 47, 52) associated with the signal transducers (18; 24; 28, 29; 37; 45, 48; 61, 62) and supplying measured angular acceleration and angular position parameters, and

c) a circuit for utilizing the measured parameters, comprising a path reconstruction (1) which reconstructs the value for at least the angular velocity with the aid of a first integration stage (2) and a second integration stage (3) downstream of the first.

2. System according to Claim 1, characterized in that the two signal transducers are formed by different regions of a one-piece body (18; 37).

3. System according to Claim 1, characterized in that the mechanical unit is constructed of several parts and comprises at least one disk (24; 28; 29; 48; 61, 62) arranged concentrically with the axis of rotation of the rotating element (23; 30; 49).

4. System according to Claim 3, characterized in that the mechanical unit consists of a composite structure composed of a plurality of coaxially-arranged disks (28, 29; 61, 62) of which at least one (28, 62) forms the angular acceleration signal transducer and at least one other (29; 61) forms the angular position signal transducer.

5. System according to any one of Claims 1 to 4, characterized by a rotationally rigid connection of the mechanical unit to the rotating element (17; 23; 30; 38; 49).

6. System according to any one of Claims 1 to 5, characterized in that the utilization circuit (1) includes at least one additional circuit (53, 55) for at least partially compensating for the time lag of the output signal ($\alpha_m$) of the signal-acquisition system for the angular acceleration, relative to the actual angular acceleration ($\alpha_G$).

7. System according to Claim 6, characterized in that the additional circuit (53, 55) comprises a weighting circuit (53) which weights the signal ($\alpha_m$) supplied by the angular acceleration signal-acquisition system with the quotient of the measurement time constant ($T_m$) of this signal-acquisition system and the integration time constant ($T_o$) of the first integration stage (2), which is added, in the form of a forward coupling, to the output signal of the first integration stage (2).

8. System according to Claim 7, characterized in that the additional circuit comprises a monitoring circuit (55) which is composed of an amplifying input component (58) to which the signal ($\alpha_m$) supplied by the device for measuring the angular acceleration is applied, an integration stage (56) disposed downstream of the input component (58), and an amplifying correction component (57) which feeds back the difference between the output signal ($\omega_b$) of the integrator (2) of the path reconstruction and the output signal of this integration stage (56) to the input of the latter, and by means of which monitoring circuit (55) an angular acceleration value ($\alpha_b$) which is less delayed with respect to the actual value ($\alpha_G$) than the value output by the device for measuring the angular acceleration is produced.

9. System according to Claim 8, characterized in that the output signal of a correction component (4) is applied to the input of the integration stage (56) of the monitoring circuit (55), the output signal of the correction component (4) also acting, in addition to the angular acceleration signal, as an input signal for the integrator (2) of a path monitoring circuit (1) and the input signal of the correction component (4) being the difference between the measured angular position signal ($\varepsilon_G$) and the output signal of the integrator (3) of the path monitoring circuit (1).

10. System according to any one of Claims 1 to 9, characterized in that the utilization circuit is purely digital.

11. System according to any one of Claims 1 to 10, characterized by a serial output of the digital values of the utilization circuit.

12. System according to Claim 11, characterized in that the utilization circuit comprises at least one electro-optical output to which an optical wave guide can be connected.

13. System according to any one of Claims 1 to 12, characterized in that the utilization circuit is integrated in the element.

14. System according to any one of Claims 1 to 13, characterized in that the angular acceleration sensor is formed as an analogue sensor working in accordance with the Ferraris principle with a rotary body in the form of a disk (18, 24, 28) or of a hollow cylinder (37, 45) made of an electrically-conducting, non-ferromagnetic material, through which a stationary, constant magnetic field extends in one direction in one half and in the other direction in the other half, and which comprises, as a signal-acquisition system, at least one magnetic flux sensor (19, 20; 25, 26; 36, 36'; 40, 41; 46, 47) through which the magnetic flux linked by the eddy currents flowing in the rotary body passes, and which comprises at least one coil (20; 26; 36'; 41; 47) in which a change in this magnetic flux induces an electrical voltage.

**15.** System according to Claim 14, characterized in that the magnetic flux sensor comprises a flux guide body (19; 25; 36; 40; 46) which is closed except for an air-gap, in which air gap the portion of the rotary body lying between the regions through which the constant magnetic field extends is disposed.

**16.** System according to Claim 14 or Claim 15, characterized in that the angular acceleration signal transducer comprises at least one second disk (62) of electrically-conductive, non-ferromagnetic material, the disk (61) which serves to determine the angular position being disposed between the second disk (62) and the first disk (62) and also being coupled rigidly to the second disk (62).

**17.** System according to Claim 16, characterized in that the stack formed by the disks (61, 62) is constructed so as to be symmetrical with respect to its transverse median plane and the first and second disks (62) are composed of the same material.

**18.** System according to Claim 16 or Claim 17, characterized in that the first and the second disks (62) are composed of a material with a low temperature coefficient.

**19.** System according to any one of Claims 1 to 18, characterized in that an edge region (21, 24", 42, 43) of the mechanical unit forming a rotary body (18, 24, 37) is constructed as a signal transducer for determining the angular position.

**20.** System according to Claim 19, characterized in that the edge region, constructed as a signal transducer for determining the angular position, forms, in alternation, regions (21; 32; 43; 50') which are transparent and regions (21' 33, 42, 50) which are opaque or slightly transparent to the light used and lies in the path of the beam of a light barrier (22; 31; 44; 52).

**21.** System according to Claim 19 or Claim 20, characterized in that the signal transducer for determining the angular position is formed by a glass disk (61) provided with opaque segments (63) or opaque strips in its outer edge region.

**22.** System according to any one of Claims 1 to 21, characterized in that the output signal ($\alpha_m$) of the angular acceleration signal-acquisition system is multiplied in a multiplication device (66) by a correction factor ($\lambda$) compensating for the temperature dependency of the output signal ($\alpha_m$).

**23.** System according to Claim 22, characterized in that the relationship

$$\lambda = \frac{1}{v}$$

in which v indicates the temperature dependent measuring-component amplification of the angular acceleration signal-acquisition system is true for the correction factor ($\lambda$).

**24.** System according to Claim 23, characterized in that the input of the multiplication device (66) for the correction factor ($\lambda$) is connected to a memory (67) in which the dependency of the measuring component amplification (v) on temperature, determined by measurement techniques or by means of a thermal model for the rotary body of the measuring device and its surroundings, is stored.

**25.** System according to Claim 24, characterized by a regulation circuit in which the correction factor ($\lambda$) is the adjustment quantity and by means of which, during an at least approximately constant angular acceleration other than zero, the modified angular acceleration signal ($\alpha_m^*$) available at the output of the multiplication device (66) is readjusted to an angular acceleration reconstruction ($\hat{\alpha}$) obtained by a double differentiation of the signal ($\varepsilon_G$) characterizing the angular position.

**26.** System according to Claim 24, characterized by a regulation circuit with a regulator (71) which has the amplification factor $sgn(\alpha_m).K_\alpha$ and at the input of which there is a signal which is equal to the difference between the measured angular position value ($\varepsilon_m$) differentiated once and the modified angular acceleration signal ($\alpha_m^*$) integrated once.

**27.** System according to Claim 26, characterized in that the measured angular position value ($\varepsilon_m$) differentiated once is picked up at the input of the second integrator (3) of the path monitoring circuit (1).

**28.** System according to any one of Claims 25 to 27, characterized by a control logic unit (69) at the input of which is the output signal ($\alpha_m$) of the angular acceleration signal-acquisition system and which closes the regulation circuit only when there is an at least approximately constant angular acceleration other than zero.

**29.** System according to Claim 28, characterized in that the control logic unit (69) is formed by a threshold circuit responsive to the value of the output signal ($\alpha_m$) of the angular acceleration signal-acquisition system.

**30.** System according to Claim 24, characterized by an oscillating circuit with damping dependent on the temperature of the rotary body (18) of the device for measuring the angular acceleration.

31. System according to Claim 30, characterized in that the inductance of the oscillating circuit comprises a magnetic-flux guide body (74) which is closed except for an air-gap, in which air-gap the rotary body (18) of the angular acceleration signal-acquisition system engages.

**Revendications**

1. Système de capteur pour déterminer au moins l'un des trois paramètres suivants: accélération angulaire, vitesse angulaire ou position angulaire d'un composant rotatif (17, 23, 30, 38, 39), comprenant:

a) deux capteurs (18; 24; 28, 29; 37; 45, 48; 61, 62) de signaux à relier au composant (17, 23, 30, 38, 49), qui sont reliés entre eux de façon fixe à rotation et sont réalisés sous forme d'unité mécanique,
b) des systèmes de détection (19, 20, 22; 25, 26, 27; 31, 36, 36'; 40, 41, 44; 46, 47, 52) de signaux associés aux capteurs (18; 24; 28, 29; 37; 45, 48; 61, 62) de signaux, qui fournissent les grandeurs mesurées nécessaires pour l'accélération angulaire et la position angulaire; et
c) un circuit d'évaluation des grandeurs mesurées qui comporte un dispositif de reconstitution (1) de trajet qui calcule les valeurs d'au moins la vitesse angulaire au moyen d'un premier étage d'intégration (2) et d'un deuxième étage d'intégration (3) qui le suit.

2. Système selon la revendication 1, caractérisé en ce que les deux capteurs de signaux sont constitués par des zones différentes d'un corps d'un seul tenant (18; 37).

3. Système selon la revendication 1, caractérisé en ce que l'unité mécanique est réalisée en plusieurs parties et comporte au moins un disque (24; 28, 29; 48; 61, 62) disposé de façon concentrique par rapport à l'axe de rotation du composant tournant (23; 30; 49).

4. Système selon la revendication 3, caractérisé en ce que l'unité mécanique se compose d'une combinaison de plusieurs disques (28, 29; 61, 62) disposés de façon coaxiale parmi lesquels au moins l'un (28; 62) constitue le capteur de signaux pour l'accélération angulaire et au moins un autre (29; 61) constitue le capteur de signaux pour la position angulaire.

5. Système selon l'une des revendications 1 à 4, caractérisé par une liaison fixe en rotation de l'unité mécanique et du composant tournant (17; 23; 30;

38; 49).

6. Système selon l'une des revendications 1 à 5, caractérisé en ce que le circuit d'évaluation (1) contient au moins un circuit additionnel (53, 55) destiné à compenser au moins en partie le retard temporel du signal de sortie ($\alpha_m$) du système de détection de signaux pour l'accélération angulaire par rapport à l'accélération angulaire réelle ($\alpha_G$).

7. Système selon la revendication 6, caractérisé en ce que le circuit additionnel (53, 55) comporte un circuit de pondération (53), qui pondère le signal ($\alpha_m$) d'accélération angulaire envoyé par le système de détection de signaux au moyen du quotient de la constante de temps de mesure ($T_m$) de ce système de détection de signaux par la constante de temps d'intégration ($T_o$) du premier étage d'intégration (2) et l'ajoute, sous forme d'un couplage en sens direct, au signal de sortie du premier étage d'intégration (2).

8. Système selon la revendication 7, caractérisé en ce que le circuit additionnel comporte un circuit d'observateur (55), qui se compose d'un élément amplificateur (58) d'entrée auquel est appliqué le signal ($\alpha_m$) envoyé pour l'accélération angulaire par le dispositif de mesure, d'un étage d'intégration (56) agencé en aval de l'élément d'entrée (58) et d'un élément de correction amplificateur (57) qui renvoie à l'entrée de l'étage d'intégration (56) la différence entre le signal de sortie ($W_b$) de l'intégrateur (2) de la reconstitution de trajet et le signal de sortie de cet étage d'intégration (56), et au moyen duquel est formée une valeur d'accélération angulaire ($\alpha_b$) qui est moins retardée, par rapport à la valeur réelle ($\alpha_G$), que la valeur donnée par le dispositif de mesure pour l'accélération angulaire.

9. Système selon la revendication 8, caractérisé en ce que le signal de sortie d'un élément de correction (4), dont le signal de sortie intervient également par addition au signal d'accélération angulaire comme signal d'entrée pour l'intégrateur (2) d'un circuit d'observateur (1) de trajet et dont le signal d'entrée est la différence entre le signal de mesure ($\varepsilon_G$) de la position angulaire et le signal de sortie de l'intégrateur (3) du circuit d'observateur (1) de trajet, est amené à l'entrée de l'étage d'intégration (56) du circuit d'observateur (55).

10. Système selon l'une des revendications 1 à 9, caractérisé en ce que le circuit d'évaluation est réalisé sous forme purement numérique.

11. Système selon l'une des revendications 1 à 10, caractérisé par une sortie sérielle des valeurs numériques du circuit d'évaluation.

**12.** Système selon la revendication 11, caractérisé en ce que le circuit d'évaluation comporte au moins une sortie électro-optique à laquelle un guide d'ondes lumineuses peut être raccordé.

**13.** Système selon l'une des revendications 1 à 12, caractérisé en ce que le circuit d'évaluation est intégré dans l'unité modulaire.

**14.** Système selon l'une des revendications 1 à 13, caractérisé en ce que le capteur pour l'accélération angulaire est' réalisé sous forme de capteur analogique fonctionnant selon le principe des instruments à champ tournant, ou de Ferraris, comportant un corps rotatif en forme de disque (18, 24, 28), ou de cylindrique creux (37, 45) en matière électriquement conductrice non ferromagnétique qui est traversé dans sa première moitié dans un sens, et dans son autre moitié dans l'autre sens, par un champ magnétique continu fixe, et qu'il comporte en outre comme système de détection des signaux au moins un capteur (19, 20; 25, 26; 36, 36'; 40, 41; 46, 47) de flux magnétique qui est traversé par un champ magnétique relié avec les courants de Foucault qui passent dans le corps en rotation et comporte au moins une bobine (20; 26; 36'; 41; 47) dans laquelle une modification de ce champ magnétique induit une tension électrique.

**15.** Système selon la revendication 14, caractérisé en ce que le capteur de flux magnétique comporte un corps conducteur (19; 25; 36; 40; 46) de flux fermé à une lame d'air, dans la lame d'air duquel se trouve la partie du corps magnétique tournant qui est traversée par le champ magnétique continu.

**16.** Système selon la revendication 14 ou 15, caractérisé en ce que le capteur de signaux pour l'accélération angulaire comporte au moins un deuxième disque (62) en matière électriquement conductrice non ferromagnétique, le disque (61) servant à la détection de la position angulaire, couplé de façon fixe aussi au deuxième disque (62), étant agencé entre ce dernier et le premier disque (62).

**17.** Système selon la revendication 16, caractérisé en ce que la pile constituée par les disques (61, 62) est réalisée de façon symétrique par rapport à son plan transversal médian et en ce que le premier et le deuxième disques (62) sont constitués de la même matière.

**18.** Système selon la revendication 16 ou 17, caractérisé en ce que le premier et le deuxième disques (62) se composent d'une matière à faible coefficient de température.

**19.** Système selon l'une des revendications 1 à 18, caractérisé en ce qu'une zone marginale (21, 24", 42, 43) de l'unité mécanique qui constitue un corps rotatif (18, 24, 37) est réalisée sous forme de capteur de signaux pour déterminer la position angulaire.

**20.** Système selon la revendication 19, caractérisé en ce que la zone marginale, réalisée sous forme de capteurs de signaux pour déterminer la position angulaire, forme en alternance des zones optiquement translucides (21; 32; 43; 50') et des zones optiquement non translucides ou moins translucides (21', 33, 42, 50), pour la lumière utilisée, et est située dans le passage des rayons d'un barrage photo-électrique (22; 31; 44; 52).

**21.** Système selon la revendication 19 ou 20, caractérisé en ce que le capteur de signaux destiné à la détection de la position angulaire est formé d'un disque (61) en verre qui est pourvu, dans sa zone marginale extérieure, de segments non translucides (63) ou de bandes non translucides.

**22.** Système selon l'une des revendications 1 à 21, caractérisé en ce que le signal de sortie ($\alpha_m$) du système de détection de signaux pour l'accélération angulaire est multiplié, dans un multiplicateur (66), par un facteur de correction ($\lambda$) qui compense la dépendance du signal de sortie ($\alpha_m$) vis-à-vis de la température.

**23.** Système selon la revendication 22, caractérisé en ce que le facteur de correction ($\lambda$) satisfait à la relation

$$\lambda = 1/v$$

où v désigne l'amplification, en fonction de la température, de l'élément de mesure du système de détection de signaux pour l'accélération angulaire.

**24.** Système selon la revendication 23, caractérisé en ce que l'entrée du multiplicateur (66) pour le facteur de correction ($\lambda$) est raccordée à une mémoire (67) dans laquelle est inscrite la dépendance, vis-à-vis de la température, de l'amplification (v) de l'élément de mesure, dépendance qui est déterminée par des techniques de mesure ou au moyen d'un modèle thermique pour le corps rotatif du dispositif de mesure et son environnement.

**25.** Système selon la revendication 24, caractérisé par un circuit de régulation dans lequel le facteur de correction ($\lambda$) est la variable réglante et au moyen duquel, pendant une accélération angulaire différente de zéro au moins à peu près constante, le signal modifié d'accélération angulaire ($\alpha^*_m$), disponible à

la sortie du multiplicateur (66) est appliqué à une valeur calculée ($\hat{\alpha}$) d'accélération obtenue par une double différenciation du signal ($\varepsilon_G$) qui caractérise la position angulaire.

26. Système selon la revendication 24, caractérisé par un circuit de régulation comportant un régulateur (71) qui comporte le facteur d'amplification sgn($\alpha_m$). $K_\alpha$ et à l'entrée duquel est appliqué un signal qui est égal à la différence entre la valeur mesurée ($\varepsilon_m$) du signal de position, différenciée une fois, et le signal modifié ($\alpha^*_m$) d'accélération angulaire intégré une fois.

27. Système selon la revendication 26, caractérisé en ce que la valeur différenciée une fois ($\varepsilon_m$) de la position angulaire est prélevée à l'entrée du deuxième intégrateur (3) du circuit d'observateur (1) de trajet.

28. Système selon l'une des revendications 25 à 27, caractérisé par une logique de commande (69) à l'entrée de laquelle est appliqué le signal de sortie ($\alpha_m$) du système de détection de signaux pour l'accélération angulaire, et qui ne ferme la boucle de régulation que pour une accélération non nulle, au moins à peu près constante.

29. Système selon la revendication 28, caractérisé en ce que la logique de commande (69) est formée par un commutateur de valeur de seuil qui répond à la valeur du signal de sortie ($\alpha_m$) du système de détection de signaux pour l'accélération angulaire.

30. Système selon la revendication 24, caractérisé par un circuit oscillant à amortissement dépendant de la température du corps rotatif (18) du dispositif de mesure pour l'accélération angulaire.

31. Système selon la revendication 30, caractérisé en ce que l'inductance du circuit oscillant comporte un corps conducteur (74) de flux magnétique fermé à une lame d'air, dans la lame d'air duquel le corps rotatif (18) du système de détection de signaux pour l'accélération angulaire pénètre.

# Fig.1

EP 0 661 543 B1

Fig.2

EP 0 661 543 B1

EP 0 661 543 B1

# Fig.3

# Fig.4

22

# Fig.5

# Fig.6

# Fig.7

# Fig.8

# Fig.9

# Fig.10

# Fig.11

# Fig.12

**Fig.13**

Fig.14

# Fig.15

EP 0 661 543 B1

$\alpha$

$\omega$

$\varepsilon$

$E_G\,(P)$

# Fig.16

$\alpha_G$

$\omega_G$

$\varepsilon_G = \varepsilon_m$

$g_\alpha$

$g_\omega$

2

3

+
−

+

+
−

+

+

1

57

$g_m$

+
−

59

58

$K_\alpha$

+
+

55

$\alpha_m$

60

$\alpha_b$

56

$\omega_b$

$\varepsilon_b$

30

Fig.17

EP 0 661 543 B1

# Fig.18

Geber-signale

sin γ    cos ß    | Cosinus Tabelle |    n

cos γ    sin ß    | Sinus Tabelle |    n

n

sin (ß-γ)

Down /Up
Zählrichtung

| n-Bit Zähler |

Takt

**Fig.19**

EP 0 661 543 B1

# Fig.20

# Fig.21

**Fig.22**

EP 0 661 543 B1

Fig.23

Fig.24

EP 0 661 543 B1

**Fig.25**

**Fig.26**

# Fig.27